# EUROPEAN PATENT APPLICATION

(11) **EP 4 664 341 A1**
(43) Date of publication of application: **17.12.2025**
(21) Application number: 25180383.9
(22) Date of filing: 03.06.2025
(51) Int. Cl.: G06F 30/18, G06F 30/27, G06F 111/12, G06F 113/14, G06F 113/16

(54) **LINE LIST GENERATION SYSTEM, LINE LIST GENERATION METHOD, AND LINE LIST GENERATION PROGRAM**

(30) Priority: 13.06.2024 JP 2024095897
(71) Applicant: Yokogawa Electric Corporation, Tokyo 180-8750 (JP)
(72) Inventor: TSUBOTA, Ichiro, Musashino-shi, Tokyo, 180-8750, (JP); OKUYAMA, Shin, Musashino-shi, Tokyo, 180-8750, (JP); YOKOYAMA, Ryusuke, Musashino-shi, Tokyo, 180-8750, (JP)
(74) Representative: Winter, Brandl - Partnerschaft mbB

(57) **Abstract**

A line list generation system (100) acquires a plant diagram that is used for construction, operation, and maintenance of a plant, detects a symbol and a line that are included in the plant diagram, and generates a line list related to a pipe that is installed in the plant, based on the detection result.

## Description

### FIELD

The present invention relates to a line list generation system, a line list generation method, and a line list generation program.

### BACKGROUND

As a diagram (appropriately referred to as a "plant diagram") that is used for construction, operation, and maintenance of a plant, a building diagram, a layout diagram, a Piping and Instrument Diagram (P&ID: a pipe instrumentation diagram), an Elementary Control wiring Diagram (ECWD: an expanded connection diagram), an Interlock Block Diagram (IBD), a single line diagram, a soft logic diagram, or the like is known. For example, a plant administrator (a plant operator or a system user) generates, as the plant diagram, a line list in which pipes that are installed in a plant are listed, by using the P&ID (see, for example, Japanese Laid-open Patent Publication No. 2019-106141 and Japanese Laid-open Patent Publication No. 2023-006480).

However, in the technology as described above, it is difficult to easily generate a line list from a plant diagram. For example, in the technology as described above, it is possible to automatically generate a line list for a P&ID that is drawn by two-dimensional Computer Aided Design (CAD) that is dedicated for a P&ID, but it is impossible to automatically generate a line list for a P&ID that is drawn by two-dimensional CAD that is not dedicated for a P&ID. Therefore, a plant administrator manually generates a line list for a P&ID that is drawn by two-dimensional CAD that is not dedicated for a P&ID, which is inefficient.

The present invention has been conceived in view of the foregoing situations, and an object of the present invention is to easily generate a line list from a plant diagram.

### SUMMARY

According to an aspect of the embodiments, a line list generation system includes an acquisition unit that acquires a diagram that is used for construction, operation, and maintenance of a plant, a detection unit that detects a symbol and a line that are included in the diagram, and a generation unit that generates a line list related to a pipe that is installed in the plant, based on the detection result.

According to an aspect of the embodiments, a line list generation method that is implemented by a computer, the line list generation method includes acquiring a diagram that is used for construction, operation, and maintenance of a plant, detecting a symbol and a line that are included in the diagram, and generating a line list related to a pipe that is installed in the plant, based on the detection result.

According to an aspect of the embodiments, a line list generation program that causes a computer to execute a process, the process includes acquiring a diagram that is used for construction, operation, and maintenance of a plant, detecting a symbol and a line that are included in the diagram, and generating a line list related to a pipe that is installed in the plant, based on the detection result.

### BRIEF DESCRIPTION OF THE DRAWINGS

FIG. 1 is a diagram illustrating a configuration example and a process example of a line list generation system according to one embodiment;
FIG. 2 is a block diagram illustrating a configuration example of each of apparatuses of the line list generation system according to one embodiment;
FIG. 3 is a diagram illustrating an example of a plant diagram information storage unit of a server apparatus according to one embodiment;
FIG. 4 is a diagram illustrating an example of a symbol pattern information storage unit of the server apparatus according to one embodiment;
FIG. 5 is a diagram illustrating an example of a symbol detection information storage unit of the server apparatus according to one embodiment;
FIG. 6 is a diagram illustrating an example of a line pattern information storage unit of the server apparatus according to one embodiment;
FIG. 7 is a diagram illustrating an example of a line detection information storage unit of the server apparatus according to one embodiment;
FIG. 8 is a diagram illustrating an example of a line generation information storage unit of the server apparatus according to one embodiment;
FIG. 9 is a diagram illustrating an example of a detection model storage unit of the server apparatus according to one embodiment;
FIG. 10 is a diagram illustrating a first specific example of a display screen of a plant administrator terminal according to one embodiment;
FIG. 11 is a diagram illustrating a second specific example of the display screen of the plant administrator terminal according to one embodiment;
FIG. 12 is a diagram illustrating a third specific example of the display screen of the plant administrator terminal according to one embodiment;
FIG. 13 is a diagram illustrating a fourth specific example of the display screen of the plant administrator terminal according to one embodiment;
FIG. 14 is a sequence diagram illustrating an example of the flow of an entire process that is performed by the line list generation system according to one embodiment; and
FIG. 15 is a diagram illustrating a hardware configuration example according to one embodiment.

### DETAILED DESCRIPTION OF THE PREFERRED EMBODIMENTS

Embodiments of a line list generation system, a line list generation method, and a line list generation program according to the present invention will be described in detail below with reference to the drawings. Meanwhile, the present invention is not limited by the embodiments described below.

### 1. Configuration and process of line list generation system 100

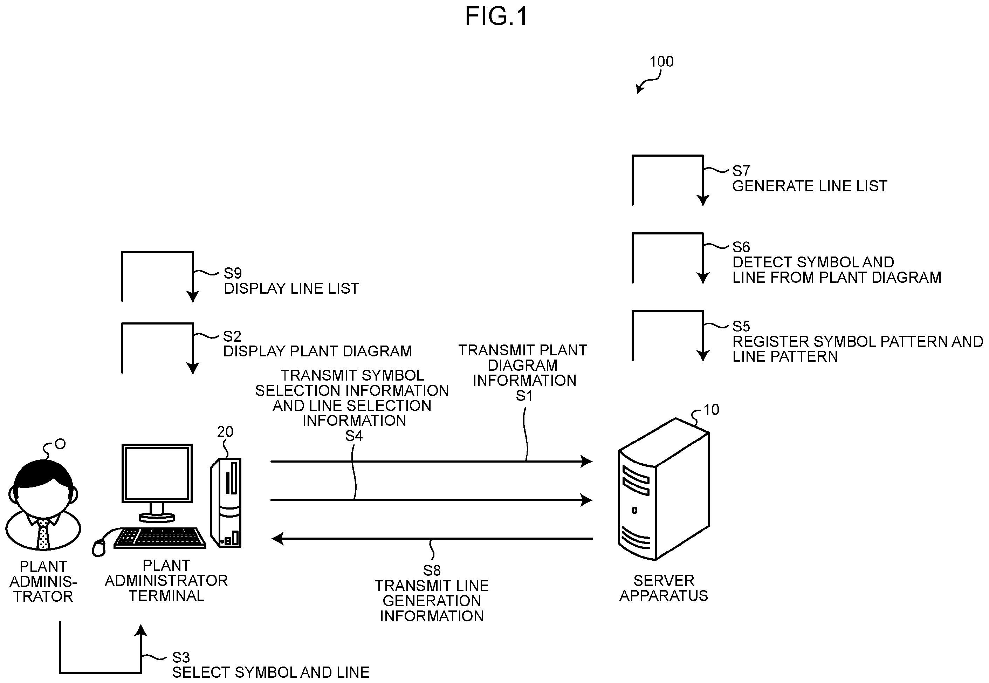

A configuration and a process of a line list generation system 100 according to one embodiment will be described in detail below with reference to FIG. 1. FIG. 1 is a diagram illustrating a configuration example and a process example of the line list generation system 100 according to one embodiment. In the following, a configuration example of the entire line list generation system 100, a process example of the line list generation system 100, and an effect of the line list generation system 100 will be described.

### 1-1. Configuration example of entire line list generation system 100

A configuration example of the entire line list generation system 100 according to one embodiment will be described. The line list generation system 100 includes a server apparatus 10 that is a line list generation apparatus and a plant administrator terminal 20 that is used by a plant administrator O. Here, the server apparatus 10 and the plant administrator terminal 20 are communicably connected to each other in a wired or wireless manner via a predetermined communication network (not illustrated). Meanwhile, as the predetermined communication network, various kinds of communication networks, such as the Internet and a dedicated line, may be adopted. Further, the line list generation system 100 illustrated in FIG. 1 may include the plurality of server apparatuses 10 or the plurality of plant administrator terminals 20.

### 1-2. Process example of entire line list generation system 100

A process example of the entire line list generation system 100 according to one embodiment will be described. Meanwhile, processes from Step S1 to Step S9 below may be performed in a different order. Further, some of the processes from Step S1 to Step S9 below may be omitted.

### 1-2-1. Plant diagram information transmission process

Firstly, the plant administrator terminal 20 transmits plant diagram information to the server apparatus 10 (Step S1). For example, the plant administrator terminal 20 transmits the plant diagram information that is selected by operation that is performed by the plant administrator O to the server apparatus 10. At this time, the server apparatus 10 acquires and stores the plant diagram information.

Here, a plant diagram is a diagram that is used for construction, operation, and maintenance of a plant, and is, for example, a building diagram, a layout diagram, a P&ID, an ECWD, an IBD, a single line diagram, a soft logic diagram, or the like that is generated with digital data.

### 1-2-2. Plant diagram display process

Secondly, the plant administrator terminal 20 displays a plant diagram (Step S2). For example, the plant administrator terminal 20 displays, on a monitor screen, the plant diagram that is selected by operation that is performed by the plant administrator O.

### 1-2-3. Symbol and line selection process

Thirdly, the plant administrator O selects a symbol and a line by operating the plant administrator terminal 20 (Step S3). For example, the plant administrator O selects a symbol of a pump by performing click operation on the symbol of the pump in the plant diagram that is displayed on the monitor screen of the plant administrator terminal 20. Further, the plant administrator O selects a line of a pipe by performing click operation on the line of the pipe in the plant diagram that is displayed on the monitor screen of the plant administrator terminal 20.

Here, the symbol is a sign that represents a component of the plant and that is displayed in the plant diagram. Further, the component of the plant is a plant device (for example: a control device, a communication device, or a measurement device), a plant facility (for example: a tank, a pump, or a furnace), or the like that is included in the plant. Furthermore, the line is a sign that represents a connection component that connects the components of the plant and that is displayed in the plant diagram. Moreover, the connection component is a pipe (for example: a pipe through which a fluid flows) or wiring (for example: wiring through which electricity flows) that connects the plant devices, the plant facilities, and the like that are included in the plant.

At this time, the plant administrator O may select a part of symbols and lines that are included in the plant diagram or select all of the symbols and the lines by operating the plant administrator terminal 20. Specifically, when a line list of pipes in a specific range in the plant diagram is to be generated, the plant administrator O selects the specific range in the plant diagram that is displayed on the monitor screen of the plant administrator terminal 20. In contrast, when a line list of pipes in the entire range of the plant diagram is to be generated, the plant administrator O selects the entire range of the plant diagram that is displayed on the monitor screen of the plant administrator terminal 20. Furthermore, when a line list of pipes that are included in a plurality of plant diagrams is to be generated, the plant administrator O selects a specific range or an entire range of each of the plant diagrams that are displayed on the monitor screen of the plant administrator terminal 20.

### 1-2-4. Symbol selection information and line selection information transmission process

Fourthly, the plant administrator terminal 20 transmits symbol selection information and line selection information to the server apparatus 10 (Step S4). For example, the plant administrator terminal 20 transmits identification information on a symbol of a pump that is selected by the plant administrator O or location information in the plant diagram to the server apparatus 10, and transmits identification information on a line of a pipe that is selected by the plant administrator O or location information in the plant diagram to the server apparatus 10.

### 1-2-5. Symbol pattern and line pattern registration process

Fifthly, the server apparatus 10 registers a symbol pattern and a line pattern (Step S5). For example, the server apparatus 10 acquires the plant diagram information based on the symbol selection information that is received from the plant administrator terminal 20, and identifies a symbol pattern from digital data of a symbol of a corresponding pump. At this time, the server apparatus 10 stores the identified symbol pattern as symbol pattern information. Further, the server apparatus 10 acquires the plant diagram information based on the line selection information that is received from the plant administrator terminal 20, and identifies a line pattern from digital data of a line of a corresponding pipe. At this time, the server apparatus 10 stores the identified line pattern as line pattern information.

Here, the symbol pattern is identification information for identifying a form of a symbol, and is, for example, a shape, a line style, a color, or the like of the symbol. Further, the line pattern is identification information for identifying a form of a line, and is, for example, a thickness, a line style, a color, or the like of the line.

### 1-2-6. Symbol and line detection process

Sixthly, the server apparatus 10 detects a symbol and a line from the plant diagram (Step S6). For example, the server apparatus 10 searches through the acquired plant diagram information and detects a symbol that coincides with or is similar to the identified symbol pattern. At this time, the server apparatus 10 generates and stores symbol detection information that includes a symbol detection diagram that is a plant diagram in which the detected symbol is colored and displayed in a highlighted manner. Further, the server apparatus 10 generates and stores the symbol detection information that includes a symbol detection list in which detected symbols are listed.

Furthermore, the server apparatus 10 searches through the acquired plant diagram information and detects a line that coincides with or is similar to the identified line pattern. At this time, the server apparatus 10 generates and stores line detection information that includes a line detection diagram that is a plant diagram in which a detected line is colored and displayed in a highlighted manner. Moreover, the server apparatus 10 generates and stores the line detection information that includes a line detection list in which detected lines are listed.

### 1-2-7. Line list generation process

Seventhly, the server apparatus 10 generates a line list from a detection result (Step S7). For example, the server apparatus 10 converts the acquired plant diagram information to a standard data format, such as Data Exchange in the Process Industry (DEXPI), and generates and stores line generation information that includes a graph that represents a connection relationship between a symbol and a line based on the detected symbol and the detected line. Furthermore, the server apparatus 10 generates and stores the line generation information that includes a line list that represents a connection relationship between a plant device and a pipe that are installed in the plant, based on the generated graph.

The server apparatus 10 may detect a symbol and a line by using a detection model DM that is a machine learning model, and notify the plant administrator O of false detection, such as a detection failure or a false positive, when the symbol detection information or the line detection information includes the detection error.

### 1-2-8. Line generation information transmission process

Eighthly, the server apparatus 10 transmits the line generation information to the plant administrator terminal 20 (Step S8). For example, the server apparatus 10 transmits the line generation information that includes the graph or the line list to the plant administrator terminal 20.

### 1-2-9. Line list display process

Ninthly, the plant administrator terminal 20 displays the line list (Step S9). For example, the plant administrator terminal 20 displays, on the monitor screen, identification information on each of pipes and a line list that indicates a plant device or a pipe that is connected to an upstream side or a downstream side of a fluid that flows through each of the pipes. Further, the plant administrator terminal 20 may display, on the monitor screen, a graph that represents the connection relationship in which a symbol is represented by a node and a line is represented by an edge.

### 1-3. Effects of entire line list generation system 100

In the following, a background of the plant diagram, an overview and a problem with a reference technology, and effects of the line list generation system 100 will be described in this order.

### 1-3-1. Background of plant diagram

In recent years, a technology related to a plant is attracting attention. For example, the software market in the international plant engineering is expanding year by year, and is expected to expand further. A plant diagram, such as a building diagram, a layout diagram, a P&ID, or an IBD, of a plant is used for construction, operation, and maintenance of the plant.

A historical background of the plant diagram will be described below by taking a P&ID that is a plant diagram as an example. Firstly, in the introduction period and the popularization period of the plant diagram, a paper P&ID has been used, and, in the following period, a P&ID that is generated with digital data by two-dimensional CAD has been used. Subsequently, an intelligent P&ID to which tag information or the like on a plant device is added has been used, and, in the future, a next-generation intelligent P&ID that is a more efficient plant diagram is expected to be used. In recent years, the P&ID is migrated from the paper P&ID and the P&ID based on two-dimensional CAD to the intelligent P&ID.

In construction, operation, and maintenance of a plant, it is needed to generate a list of devices and pipes that are described in the plant diagram, such as a building diagram, a layout diagram, a P&ID, or an IBD. However, for example, when the plant diagram is a P&ID that is drawn by two-dimensional CAD, an engineer or the like needs to visually detect symbols and lines of devices and pipes from the plant diagram, which is inefficient and may lead to a human error.

To cope with this, there is a need for a technology that enables to register a desired symbol pattern from among a plurality of symbols and lines that are included in the plant diagram that is used for construction, operation, and maintenance of a plant, detect all of symbols and lines that coincide with a shape or the like of the registered pattern from the plant diagram, and automatically generate a line list even for a P&ID that is drawn by two-dimensional CAD that is not dedicated for a P&ID.

### 1-3-2. Overview of reference technology

An overview of a reference technology related to a plant diagram will be described below. A first reference technology is a technology for improving efficiency of a pipe route design process in a plant. A second reference technology is a technology for pipe routing that enables to efficiently perform pipe routing in a plant facility that has a fixed route.

### 1-3-3. Problem with reference technology

However, in the technologies of the first reference technology and the second reference technology, there is a problem in that it is difficult to automatically generate a line list for a P&ID that is drawn by two-dimensional CAD that is not dedicated for a P&ID, although it is possible to automatically generate a line list when a plant diagram is a P&ID that is drawn by two-dimensional CAD that is dedicated for a P&ID.

### 1-3-4. Overview of line list generation system 100

The line list generation system 100 includes the server apparatus 10 that is a line list generation apparatus and the plant administrator terminal 20 that is used by the plant administrator O. The server apparatus 10 selects a symbol that has the same symbol pattern or a similar symbol pattern from among all of symbols that are included in a plant diagram, based on a symbol pattern of a symbol that represents a selected component. Further, the server apparatus 10 selects a line that has the same line pattern or a similar line pattern from among all of lines that are included in the plant diagram, based on a line pattern of a line that represents a selected connection component. Furthermore, the server apparatus 10 generates graph information that indicates a connection relationship between the symbol and the line based on the detected symbol and the detected line, and generates a line list that indicates a connection relationship between a plant device and a pipe that are installed in a plant. At this time, the server apparatus 10 transmits the line list that indicates plant devices and pipes that are connected to an upstream side and a downstream side and the graph information that represents the connection relationship between the symbols and the lines by nodes and edges, and displays the line list and the graph information on the monitor screen of the plant administrator terminal 20.

### 1-3-5. Effects

The line list generation system 100 is able to efficiently detect symbols and lines from a plant diagram that is used for construction, operation, and maintenance of a plant, automatically generate a line list, and provide the line list to a user of the plant diagram, such as the plant administrator O, a plant engineer, a plant contractor, or a pipe designer. Further, the line list generation system 100 is able to automatically generate a line list even when the plant diagram is a P&ID that is drawn by two-dimensional CAD that is not dedicated for a P&ID.

As described above, the line list generation system 100 is able to easily generate a line list from a plant diagram, so that it is expected to contribute to development of a plant related technology for which the market is expanding.

### 2. Configuration and process of each of apparatuses in line list generation system 100

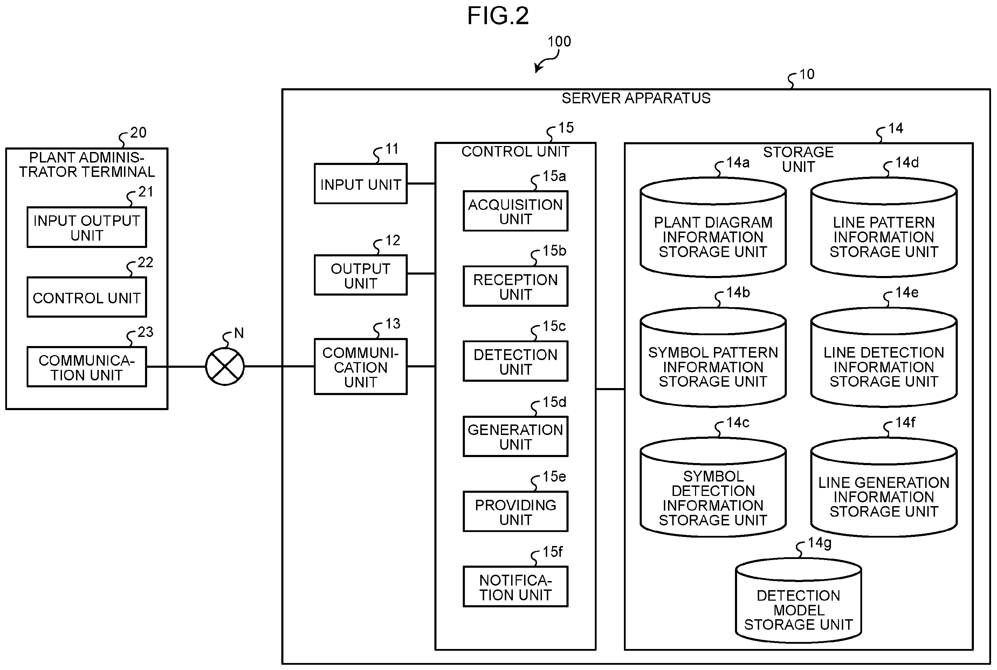

With reference to FIG. 2 to FIG. 9, a configuration example and a process example of each of the apparatuses that are included in the line list generation system 100 illustrated in FIG. 1 will be described. In the following, a configuration example of the entire line list generation system 100 according to one embodiment will be first described, and configuration examples and process examples of the server apparatus 10 and the plant administrator terminal 20 will be subsequently described in detail.

### 2-1. Configuration example of entire line list generation system 100

A configuration example of the entire line list generation system 100 illustrated in FIG. 1 will be described below with reference to FIG. 2. FIG. 2 is a block diagram illustrating a configuration example of each of the apparatuses that are included in the line list generation system 100 according to one embodiment. As illustrated in FIG. 2, the line list generation system 100 includes the server apparatus 10 that is a line list generation apparatus and the plant administrator terminal 20 that is a user terminal. The server apparatus 10 is communicably connected to the plant administrator terminal 20 by a communication network N that is implemented by the Internet, a dedicated line, or the like. Further, the server apparatus 10 is installed in a cloud environment, an on-premise environment, an edge environment, or the like.

### 2-2. Configuration example and process example of server apparatus 10

A configuration example and a process example of the server apparatus 10 illustrated in FIG. 1 will be described below with reference to FIG. 2. The server apparatus 10 includes an input unit 11, an output unit 12, a communication unit 13, a storage unit 14, and a control unit 15. In the following, the configuration example and the process example of the server apparatus 10 will be described; however, the plant administrator terminal 20 is able to perform the same process. In other words, the line list generation system 100 may be implemented by only the plant administrator terminal 20.

### 2-2-1. Input unit 11

The input unit 11 controls input of various kinds of information to the server apparatus 10. For example, the input unit 11 is implemented by a mouse, a keyboard, or the like, and receives input of various kinds of information to the server apparatus 10.

### 2-2-2. Output unit 12

The output unit 12 controls output of various kinds of information from the server apparatus 10. For example, the output unit 12 is implemented by a display or the like, and outputs various kinds of information that are stored in the server apparatus 10.

### 2-2-3. Communication unit 13

The communication unit 13 controls data communication with a different apparatus. For example, the communication unit 13 performs data communication with each of communication apparatuses via a router or the like. Further, the communication unit 13 is able to perform data communication with an operator terminal (not illustrated).

### 2-2-4. Storage unit 14

The storage unit 14 stores therein various kinds of information that are referred to when the control unit 15 operates or various kinds of information that are acquired when the control unit 15 operates. The storage unit 14 includes a plant diagram information storage unit 14a, a symbol pattern information storage unit 14b, a symbol detection information storage unit 14c, a line pattern information storage unit 14d, a line detection information storage unit 14e, a line generation information storage unit 14f, and a detection model storage unit 14g. Here, the storage unit 14 may be implemented by, for example, a semiconductor memory device, such as a Random Access Memory (RAM) or a flash memory, a storage device, such as a hard disk or an optical disk, or the like. Meanwhile, in the example illustrated in FIG. 2, the storage unit 14 is installed inside the server apparatus 10, but the storage unit 14 may be installed outside the server apparatus 10 or a plurality of storage units may be installed.

### 2-2-4-1. Plant diagram information storage unit 14a

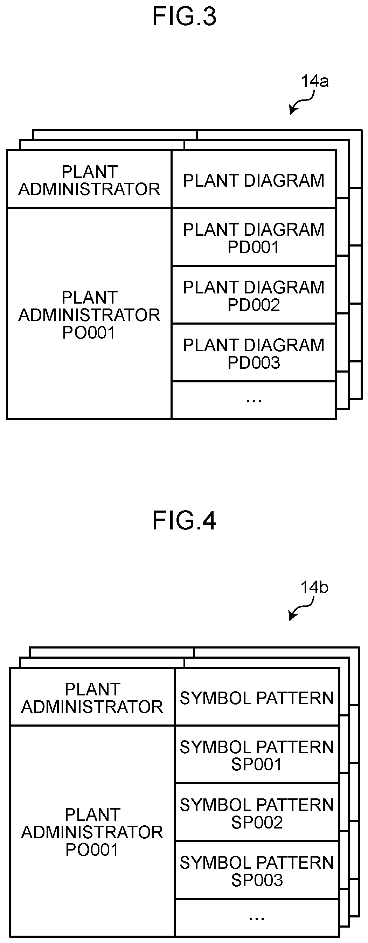

The plant diagram information storage unit 14a stores therein the plant diagram information. For example, the plant diagram information storage unit 14a stores therein the plant diagram information that is acquired by an acquisition unit 15a of the control unit 15 (to be described later). An example of data that is stored in the plant diagram information storage unit 14a will be described below with reference to FIG. 3. FIG. 3 is a diagram illustrating an example of the plant diagram information storage unit 14a of the server apparatus 10 according to one embodiment. In the example illustrated in FIG. 3, the plant diagram information storage unit 14a includes items such as a "plant administrator" and a "plant diagram".

The "plant administrator" indicates identification information for identifying a user who uses the plant diagram, and is, for example, an identification number or an identification symbol of the plant administrator O. The "plant diagram" is diagram data of a diagram related to a plant, and is digital data of a building diagram, a layout diagram, a P&ID, an ECWD, an IBD, a single line diagram, a soft logic diagram, or the like of the plant, for example.

Specifically, FIG. 3 illustrates an example in which the plant diagram information storage unit 14a stores therein data of {"plant diagram PD001", "plant diagram PD002", "plant diagram PD003", ...} as the "plant diagram" that is acquired from the plant administrator terminal 20 of the plant administrator O who is identified by a "plant administrator PO001".

### 2-2-4-2. Symbol pattern information storage unit 14b

The symbol pattern information storage unit 14b stores therein the symbol pattern information. For example, the symbol pattern information storage unit 14b stores therein a symbol pattern that is identified by a detection unit 15c of the control unit 15 (to be described later). An example of data that is stored in the symbol pattern information storage unit 14b will be described below with reference to FIG. 4. FIG. 4 is a diagram illustrating an example of the symbol pattern information storage unit 14b of the server apparatus 10 according to one embodiment. In the example illustrated in FIG. 4, the symbol pattern information storage unit 14b includes items such as a "plant administrator" and a "symbol pattern".

The "plant administrator" indicates the identification information for identifying the user who uses the plant diagram, and is, for example, the identification number or the identification symbol of the plant administrator O. The "symbol pattern" is identification information for identifying a form of a symbol, and is, for example, a shape, a line style, a color, or the like of the symbol.

Specifically, FIG. 4 illustrates an example in which the symbol pattern information storage unit 14b stores therein data of {"symbol pattern SP001", "symbol pattern SP002", " symbol pattern SP003", ...} as the "symbol pattern" of a symbol that is received from the plant administrator terminal 20 of the plant administrator O who is identified by the "plant administrator PO001".

### 2-2-4-3. Symbol detection information storage unit 14c

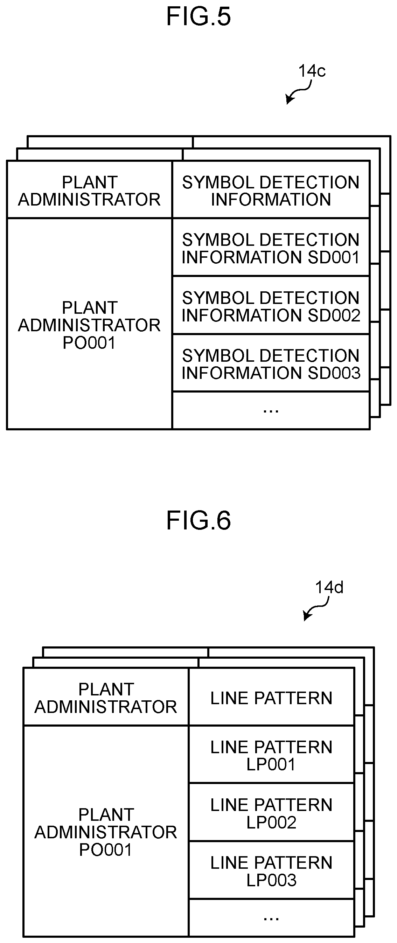

The symbol detection information storage unit 14c stores therein the symbol detection information. For example, the symbol detection information storage unit 14c stores therein symbol detection information that is generated by the detection unit 15c of the control unit 15 (to be described later). An example of data that is stored in the symbol detection information storage unit 14c will be described below with reference to FIG. 5. FIG. 5 is a diagram illustrating an example of the symbol detection information storage unit 14c of the server apparatus 10 according to one embodiment. In the example illustrated in FIG. 5, the symbol detection information storage unit 14c includes items such as a "plant administrator" and "symbol detection information".

The "plant administrator" indicates the identification information for identifying the user who uses the plant diagram, and is, for example, the identification number or the identification symbol of the plant administrator O. The "symbol detection information" is information (symbol detection result) that is related to a symbol that is output by the detection unit 15c, and is, for example, the symbol detection diagram that is a plant diagram in which a detected symbol is colored and displayed in a highlighted manner, the symbol detection list in which detected symbols are listed, or the like.

Specifically, FIG. 5 illustrates an example in which the symbol detection information storage unit 14c stores therein data of {"symbol detection information SD001", "symbol detection information SD002", "symbol detection information SD003 ", ...} as the "symbol detection information" on a symbol that is received from the plant administrator terminal 20 of the plant administrator O who is identified by the "plant administrator PO001".

### 2-2-4-4. Line pattern information storage unit 14d

The line pattern information storage unit 14d stores therein the line pattern information. For example, the line pattern information storage unit 14d stores therein a line pattern that is identified by the detection unit 15c of the control unit 15 (to be described later). An example of data that is stored in the line pattern information storage unit 14d will be described below with reference to FIG. 6. FIG. 6 is a diagram illustrating an example of the line pattern information storage unit 14d of the server apparatus 10 according to one embodiment. In the example illustrated in FIG. 6, the line pattern information storage unit 14d includes items such as a "plant administrator" and a "line pattern".

The "plant administrator" indicates the identification information for identifying the user who uses the plant diagram, and is, for example, the identification number or the identification symbol of the plant administrator O. The "line pattern" is identification information for identifying a form of a line, and is, for example, a thickness, a line style, a color, or the like of the line.

Specifically, FIG. 6 illustrates an example in which the line pattern information storage unit 14d stores therein data of {"line pattern LP001", "line pattern LP002", "line pattern LP003 ", ...} as the "line pattern" of a line that is received from the plant administrator terminal 20 of the plant administrator O who is identified by the "plant administrator PO001".

### 2-2-4-5. Line detection information storage unit 14e

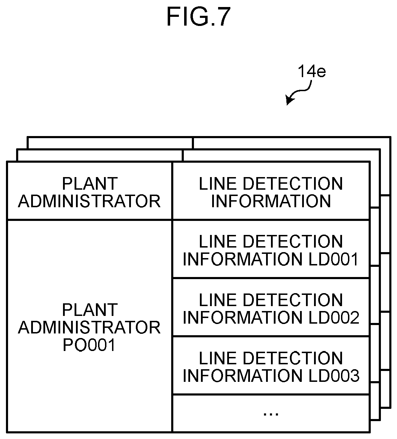

The line detection information storage unit 14e stores therein the line detection information. For example, the line detection information storage unit 14e stores therein line detection information that is generated by the detection unit 15c of the control unit 15 (to be described later). An example of data that is stored in the line detection information storage unit 14e will be described below with reference to FIG. 7. FIG. 7 is a diagram illustrating an example of the line detection information storage unit 14e of the server apparatus 10 according to one embodiment. In the example illustrated in FIG. 7, the line detection information storage unit 14e includes items such as a "plant administrator" and "line detection information".

The "plant administrator" indicates the identification information for identifying the user who uses the plant diagram, and is, for example, the identification number or the identification symbol of the plant administrator O. The "line detection information" is information (line detection result) that is related to a line that is output by the detection unit 15c, and is, for example, the line detection diagram that is a plant diagram in which a detected line is colored and displayed in a highlighted manner, the line detection list in which detected lines are listed, or the like.

Specifically, FIG. 7 illustrates an example in which the line detection information storage unit 14e stores therein data of {"line detection information LD001", "line detection information LD002", "line detection information LD003", ...} as the "line detection information" on a line that is received from the plant administrator terminal 20 of the plant administrator O who is identified by the "plant administrator PO001".

### 2-2-4-6. Line generation information storage unit 14f

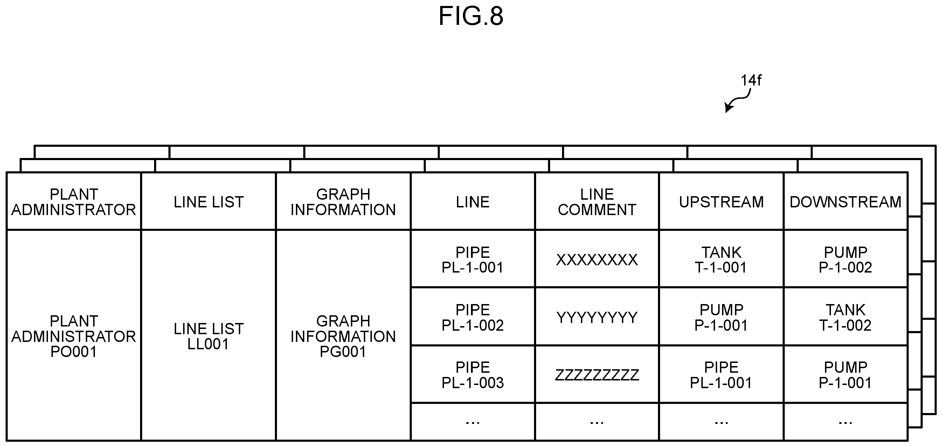

The line generation information storage unit 14f stores therein the line generation information. For example, the line generation information storage unit 14f stores therein the line generation information that includes a graph or a line list that is generated by a generation unit 15d of the control unit 15 (to be described later). An example of data that is stored in the line generation information storage unit 14f will be described below with reference to FIG. 8. FIG. 8 is a diagram illustrating an example of the line generation information storage unit 14f of the server apparatus 10 according to one embodiment. In the example illustrated in FIG. 8, the line generation information storage unit 14f includes items such as a "plant administrator", a "line list", "graph information", a "line", a "line comment", an "upstream", and a "downstream".

The "plant administrator" indicates the identification information for identifying the user who uses the plant diagram, and is, for example, the identification number or the identification symbol of the plant administrator O. The "line list" indicates identification information for identifying a line list, and is, for example, an identification number or an identification symbol of the line list. The "graph information" is data of a graph that represents a connection relationship between symbols and lines, and is, for example, digital data of the graph that represents a connection relationship or a positional relationship by nodes that represent the symbols and edges that represent the lines. The "line" indicates identification information for identifying a line, and is, for example, an identification number or an identification symbol of a pipe that is installed in the plant. The "line comment" is a text that is added to the line, and is, for example, a description of a pipe that is written with the line in the plant diagram. The "upstream" indicates identification information for identifying a symbol or a line that corresponds to an upstream side in a line flow direction, and is, for example, an identification number or an identification symbol of a plant device or a pipe that is connected to the upstream side in a fluid flow direction among plant devices and pipes that are connected to an arbitrary pipe. The "downstream" indicates identification information for identifying a symbol or a line that corresponds to a downstream side in the line flow direction, and is, for example, an identification number or an identification symbol of a plant device or a pipe that is connected to the downstream side in the fluid flow direction among the plant devices and the pipes that are connected to the arbitrary pipe.

Specifically, FIG. 8 illustrates an example in which the line generation information storage unit 14f stores therein, with respect to a line list that is the line generation information on symbols and lines received from the plant administrator terminal 20 of the plant administrator O who is identified by the "plant administrator PO001" and that is identified by a "line list LL001", "graph information PG001" as the graph information and data of {line: "pipe PL-1-001", line comment: "XXXXXXXX", upstream: "tank T-1-001", downstream: "pump P-1-002"}, {line: "pipe PL-1-002", line comment: "YYYYYYYY", upstream: "pump P-1-001", downstream: "tank T-1-002"}, {line: "pipe PL-1-003", line comment: "ZZZZZZZZZ", upstream: "pipe PL-1-001", downstream: "pump P-1-001"}.

### 2-2-4-7. Detection model storage unit 14g

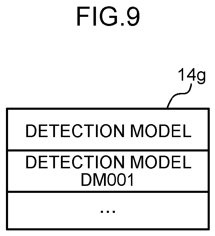

The detection model storage unit 14g stores therein the detection model DM. For example, the detection model storage unit 14g stores therein the detection model DM that is used by a notification unit 15f of the control unit 15 (to be described later). An example of data that is stored in the detection model storage unit 14g will be described below with reference to FIG. 9. FIG. 9 is a diagram illustrating an example of the detection model storage unit 14g of the server apparatus 10 according to one embodiment. In the example illustrated in FIG. 9, the detection model storage unit 14g includes an item such as a "detection model".

The "detection model" is model data of a machine learning model, and is, for example, data that includes execution data, a model parameter, a hyper parameter, or the like for executing an algorithm of the detection model DM.

Specifically, FIG. 9 illustrates an example in which the detection model storage unit 14g stores therein data of a "detection model DM001", ... as the model data of the detection model DM that is used by the notification unit 15f.

### 2-2-5. Control unit 15

The control unit 15 controls the entire server apparatus 10. The control unit 15 includes the acquisition unit 15a, a reception unit 15b, the detection unit 15c, the generation unit 15d, a providing unit 15e, and the notification unit 15f. Here, the control unit 15 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-5-1. Acquisition unit 15a

The acquisition unit 15a acquires various kinds of information. Meanwhile, the acquisition unit 15a may store various kinds of acquired information in the storage unit 14. In the following, a plant diagram information acquisition process and a plant diagram information display process will be described.

### Plant diagram information acquisition process

The acquisition unit 15a performs the plant diagram information acquisition process. For example, the acquisition unit 15a acquires a plant diagram that is used for construction, operation, and maintenance of a plant. At this time, the acquisition unit 15a acquires a plant diagram that is a configuration diagram that is generated by using a plurality of symbols that represent a plurality of components that are included in the plant. Further, the acquisition unit 15a acquires a plant diagram that is a configuration diagram that is generated by using a plurality of lines that represent a plurality of connection components that connect the components that are included in the plant. At this time, the acquisition unit 15a acquires, as the plant diagram, diagram data that includes the plurality of symbols and the plurality of lines that are generated with digital data. Furthermore, the acquisition unit 15a acquires the plant diagram information that is transmitted from the plant administrator terminal 20 serving as the user terminal and that is diagram data of the plant diagram that is selected by the plant administrator O who is the user. Meanwhile, the acquisition unit 15a stores the acquired plant diagram information in the plant diagram information storage unit 14a.

### Plant diagram information display process

The acquisition unit 15a performs the plant diagram information display process. For example, the acquisition unit 15a displays the acquired plant diagram that is used for construction, operation, and maintenance of the plant. At this time, the acquisition unit 15a displays the plant diagram on the plant administrator terminal 20.

As a specific example, the acquisition unit 15a acquires { "plant diagram PD001 ", "plant diagram PD002", "plant diagram PD003", ...} as the plant diagram information that is acquired from the plant administrator terminal 20 of the plant administrator O who is identified by the "plant administrator PO001", stores the plant diagram information in the plant diagram information storage unit 14a, and displays the plant diagram on the plant administrator terminal 20.

### 2-2-5-2. Reception unit 15b

The reception unit 15b receives various kinds of information. Meanwhile, the reception unit 15b may store the various kinds of received information in the storage unit 14. In the following, a symbol selection information reception process and a line selection information reception process will be described.

### Symbol selection information reception process

The reception unit 15b performs the symbol selection information reception process. For example, the reception unit 15b receives the symbol selection information that indicates a selection of a desired symbol from among the plurality of symbols that are included in the displayed plant diagram. At this time, the reception unit 15b receives, as the symbol selection information, a symbol that is selected by operation that is performed by the plant administrator O on the plant diagram that is displayed on the plant administrator terminal 20. Meanwhile, the reception unit 15b may store the received symbol selection information in the storage unit 14.

Furthermore, the reception unit 15b may receive, as a detection condition for detecting a symbol, symbol angle information related to orientation of the symbol, symbol text information related to text that belongs to the symbol, symbol form information related to a shape, a line style, a color, or the like of the symbol.

As a specific example, the reception unit 15b receives, as the symbol selection information that is selected by the plant administrator O by performing click operation on an arbitrary symbol of a "pump P-1" in the plant diagram displayed on the monitor screen of the plant administrator terminal 20 and that is transmitted from the plant administrator terminal 20, a "pump P-1-001" that is identification information on the symbol of the selected pump, a "plant diagram PD001 (5, 10)" that is location information in the plant diagram, and the like.

Furthermore, the reception unit 15b receives, as the detection condition for detecting the symbol, {symbol angle information: "detect completely matching symbol", symbol text information: "detect symbol including text", symbol form information: "detect symbol with completely matching shape"/"detect symbol with completely matching line style"/"color is not distinguished"} or the like.

### Line selection information reception process

The reception unit 15b performs the line selection information reception process. For example, the reception unit 15b receives the line selection information that indicates a selection of a desired line from among the plurality of lines that are included in the displayed plant diagram. At this time, the reception unit 15b receives, as the line selection information, a line that is selected by operation that is performed by the plant administrator O on the plant diagram that is displayed on the plant administrator terminal 20. Meanwhile, the reception unit 15b may store the received line selection information in the storage unit 14.

Furthermore, the reception unit 15b may receive, as a detection condition for detecting a line, line angle information related to orientation of the line, line number information related to a line number that belongs to the line, line form information related to a thickness, a line style, a color, or the like of the line.

As a specific example, the reception unit 15b receives, as the line selection information that is selected by the plant administrator O by performing click operation on a line of an arbitrary pipe in the plant diagram displayed on the monitor screen of the plant administrator terminal 20 and that is received from the plant administrator terminal 20, a "pipe PL-1-002" that is identification information on the line of a selected "pipe PL-1", a "plant diagram PD001 (7, 8)" that is location information in the plant diagram, and the like.

Furthermore, the reception unit 15b receives, as the detection condition for detecting the line, {line angle information: "detect completely matching line", line number information: "detect line including line number", line form information: "detect line with completely matching thickness"/"detect line with completely matching line style"/"color is not distinguished"} or the like.

### 2-2-5-3. Detection unit 15c

The detection unit 15c outputs a detection result. Meanwhile, the detection unit 15c may store the output detection result in the storage unit 14. In the following, a symbol pattern registration process, a symbol angle identification process, a symbol text identification process, a symbol detection process, a symbol detection information generation process, a line pattern registration process, a line angle identification process, a line number identification process, a line detection process, a line detection information generation process, and a flow direction detection process will be described.

### Symbol pattern registration process

The detection unit 15c performs the symbol pattern registration process. For example, the detection unit 15c identifies, as a pattern of the symbol for which the selection is received, at least one of a shape, a line style, and a color of the symbol by using digital data. Meanwhile, the detection unit 15c stores the identified symbol pattern in the symbol pattern information storage unit 14b.

As a specific example, when the "pump P-1-001" that is the identification information on the symbol of the selected "pump P-1" and the "plant diagram PD001 (5, 10)" that is the location information in the plant diagram are received, the detection unit 15c acquires plant diagram information on a "plant diagram PD001" from the plant diagram information storage unit 14a, identifies digital data of the symbol of the "pump P-1-001" based on the identification information and the location information, identifies {shape: "S-XXXX", line style: "solid line", color: "orange"} as the pattern of the symbol of the "pump P-1-001", and stores the symbol pattern in the symbol pattern information storage unit 14b to register the symbol pattern.

### Symbol angle identification process

The detection unit 15c performs the symbol angle identification process. For example, the detection unit 15c identifies a symbol angle that is orientation of the symbol for which the selection is received, by using digital data. Meanwhile, the detection unit 15c may store the identified symbol angle in the storage unit 14.

As a specific example, when the "pump P-1-001" that is the identification information on the symbol of the selected "pump P-1" and the "plant diagram PD001 (5, 10)" that is the location information in the plant diagram are received, the detection unit 15c acquires the plant diagram information on the "plant diagram PD001" from the plant diagram information storage unit 14a, identifies digital data of the symbol of the "pump P-1-001" based on the identification information and the location information, identifies {symbol angle: "180°"} as the symbol angle that is the orientation of the symbol of the "pump P-1-001", and stores the symbol angle in the storage unit 14.

### Symbol text identification process

The detection unit 15c performs the symbol text identification process. For example, the detection unit 15c identifies a symbol text that is a text that belongs to the symbol for which the selection is received, by using digital data. Meanwhile, the detection unit 15c may store the identified symbol text in the storage unit 14.

As a specific example, when the "pump P-1-001" that is the identification information on the symbol of the "pump P-1" that is the selected plant facility and the "plant diagram PD001 (5, 10)" that is the location information in the plant diagram are received, the detection unit 15c acquires the plant diagram information on the "plant diagram PD001" from the plant diagram information storage unit 14a, identifies digital data of the symbol of the "pump P-1-001" based on the identification information and the location information, identifies {symbol text: "S-YYYY"} as the symbol text that is a text that belongs to the symbol of the "pump P-1-001", and stores the symbol text in the storage unit 14.

### Symbol detection process

The detection unit 15c performs the symbol detection process. For example, the detection unit 15c detects a symbol from the plant diagram. The detection unit 15c detects a symbol from among the plurality of symbols that are included in the plant diagram, based on the pattern of the symbol for which the selection is received. At this time, the detection unit 15c detects all of symbols that include the symbol used for the selection and that coincide with the form of the registered pattern, from the displayed plant diagram. Further, the detection unit 15c detects all of symbols that coincide with the orientation from among the plurality of symbols that are included in the plant diagram. Furthermore, the detection unit 15c detects all of symbols that coincide with the text from among the plurality of symbols that are included in the plant diagram.

As a specific example, when {symbol form information: "detect symbol with completely matching shape"/"detect symbol with completely matching line style"/"color is not distinguished"} is received as the detection condition for detecting the symbol of the "pump P-1" in the "plant diagram PD001", the detection unit 15c acquires the plant diagram information on the "plant diagram PD001" from the plant diagram information storage unit 14a, acquires the symbol pattern of {shape: "S-XXXX", line style: "solid line", color: "orange"} of the "pump P-1" from the symbol pattern information storage unit 14b, searches through the plant diagram information on the "plant diagram PD001", and detects {"pump P-1-001", "pump P-1-002", ..., "pump P-1-006"} as symbols that coincide with the symbol pattern of {shape: "S-XXXX", line style: "solid line"}.

Furthermore, when {symbol angle information: "detect completely matching symbol"} is received as the detection condition for detecting the symbol of the "pump P-1 " in the "plant diagram PD001", the detection unit 15c detects a symbol that further coincides with the symbol angle of "180°" from among the symbols that coincide with the symbol pattern.

Moreover, when {symbol text information: "detect symbol including text"} is received as the detection condition for detecting the symbol of the "pump P-1" in the "plant diagram PD001", the detection unit 15c detects a symbol that further coincides with the symbol text of "S-YYYY" from among the symbols that coincide with the symbol pattern.

### Symbol detection information generation process

The detection unit 15c performs the symbol detection information generation process. For example, the detection unit 15c generates the symbol detection information that is a detection result related to the detected symbol. At this time, the detection unit 15c generates the symbol detection information that includes the identification information and the location information on the detected symbol. Further, the detection unit 15c generates, as the symbol detection information, the symbol detection diagram that is a plant diagram in which the detected symbol is displayed in a highlighted manner. Furthermore, the detection unit 15c generates the symbol detection list in which detected symbols are listed. Meanwhile, the detection unit 15c stores the generated symbol detection information in the symbol detection information storage unit 14c.

As a specific example of the symbol detection diagram, the detection unit 15c acquires the plant diagram information on the "plant diagram PD001" from the plant diagram information storage unit 14a, generates, as the symbol detection diagram, the plant diagram information on the "plant diagram PD001" in which symbols corresponding to identification information on {"pump P-1-001", "pump P-1-002", ..., "pump P-1-006"} that are the symbols of the detected "pump P-1" are colored in blue and displayed in a highlighted manner, and stores the symbol detection diagram in the symbol detection information storage unit 14c.

As a specific example of the symbol detection list, the detection unit 15c generates, as the symbol detection list, a list that includes the identification information on {"pump P-1-001", "pump P-1-002", ..., "pump P-1-006"} that are the symbols of the detected "pump P-1", and stores the symbol detection list in the symbol detection information storage unit 14c.

### Line pattern registration process

The detection unit 15c performs the line pattern registration process. For example, the detection unit 15c identifies, as a pattern of the line for which the selection is received, at least one of a thickness, a line style, and a color of the line by using digital data. Meanwhile, the detection unit 15c stores the identified line pattern in the line pattern information storage unit 14d.

As a specific example, when the "pipe PL-1-002" that is the identification information on the line of the selected "pipe PL-1" and the "plant diagram PD001 (7, 8)" that is the location information in the plant diagram are received, the detection unit 15c acquires the plant diagram information on the "plant diagram PD001" from the plant diagram information storage unit 14a, identifies digital data of the line of "pipe PL-1-002" based on the identification information and the location information, identifies {thickness: "L-XXXX", line style: "solid line", color: "red"} as the pattern of the line of "pipe PL-1-002", and stores the line pattern in the line pattern information storage unit 14d to register the line pattern.

### Line angle identification process

The detection unit 15c performs the line angle identification process. For example, the detection unit 15c identifies a line angle that is orientation of the line for which the selection is received, by using digital data. Meanwhile, the detection unit 15c may store the identified line angle in the storage unit 14.

As a specific example, when the "pipe PL-1-002" that is the identification information on the line of the selected "pipe PL-1" and the "plant diagram PD001 (7, 8)" that is the location information in the plant diagram are received, the detection unit 15c acquires the plant diagram information on the "plant diagram PD001" from the plant diagram information storage unit 14a, identifies digital data of the line of "pipe PL-1-002" based on the identification information and the location information, identifies {line angle: "180°"} as the line angle that is the orientation of the line of "pipe PL-1-002", and stores the line angle in the storage unit 14.

### Line number identification process

The detection unit 15c performs the line number identification process. For example, the detection unit 15c identifies a line number that belongs to the line for which the selection is received, by using digital data. Meanwhile, the detection unit 15c may store the identified line number in the storage unit 14.

As a specific example, when the "pipe PL-1-002" that is the identification information on the line of the selected "pipe PL-1" and the "plant diagram PD001 (7, 8)" that is the location information in the plant diagram are received, the detection unit 15c acquires the plant diagram information on the "plant diagram PD001" from the plant diagram information storage unit 14a, identifies digital data of the line of the "pipe PL-1-002" based on the identification information and the location information, identifies {line number: "L-YYYY"} as the line number that belongs to the line of the "pipe PL-1-002", and stores the line number in the storage unit 14.

### Line detection process

The detection unit 15c performs the line detection process. For example, the detection unit 15c detects a line from the plant diagram. At this time, the detection unit 15c detects a line from among the plurality of lines that are included in the plant diagram, based on the pattern of the line for which the selection is received. Further, the detection unit 15c detects all of lines that include the line used for the selection and that coincide with the form of the registered pattern from the displayed plant diagram. Furthermore, the detection unit 15c detects all of lines that coincide with the orientation from among the plurality of lines that are included in the plant diagram. Moreover, the detection unit 15c detects all of lines that coincide with the line number from among the plurality of lines that are included in the plant diagram.

As a specific example, when {line form information: "detect line with completely matching thickness"/"detect line with completely matching line style"/"color is not distinguished"} is received as the detection condition for detecting the line of "pipe PL-1" in the "plant diagram PD001", the detection unit 15c acquires the plant diagram information on the "plant diagram PD001" from the plant diagram information storage unit 14a, acquires the line pattern of {thickness: "L-XXXX", line style: "solid line", color: "red"} of the "pipe PL-1" from the line pattern information storage unit 14d, searches through the plant diagram information on the "plant diagram PD001", and detects {"pipe PL-1-001", "pipe PL-1-002", "pipe PL-1-003", ..., "pipe PL-1-010"} as lines that coincide with the line pattern of {thickness: "L-XXXX", line style: "solid line"}.

Furthermore, when {line angle information: "detect completely matching line"} is received as the detection condition for detecting the line of the "pipe PL-1" in the "plant diagram PD001", the detection unit 15c detects a line that further coincides with the line angle of "180°" from among the lines that coincide with or are similar to the line pattern.

Moreover, when {line number information: "detect line including line number"} is received as the detection condition for detecting the line of the "pipe PL-1" in the "plant diagram PD001", the detection unit 15c detects a line that further coincides with the line number of "L-YYYY" from among the lines that coincide with or are similar to the line pattern.

### Line detection information generation process

The detection unit 15c performs the line detection information generation process. For example, the detection unit 15c generates the line detection information that is a detection result related to the detected line. At this time, the detection unit 15c generates, as the line detection information, the line detection diagram that is a configuration diagram in which a detected line is displayed in a highlighted manner. Further, the detection unit 15c detects the line detection list in which detected lines are listed. Meanwhile, the detection unit 15c stores the generated line detection information in the line detection information storage unit 14e.

As a specific example of the line detection diagram, the detection unit 15c acquires the plant diagram information on the "plant diagram PD001" from the plant diagram information storage unit 14a, generates, as the line detection diagram, the plant diagram information on the "plant diagram PD001" in which lines corresponding to identification information on {"pipe PL-1-001", "pipe PL-1-002", "pipe PL-1-003", ..., "pipe PL-1-010"} that are the lines of the detected "pipe PL-1" are colored in blue and displayed in a highlighted manner, and stores the line detection diagram in the line detection information storage unit 14e.

As a specific example of the line detection list, the detection unit 15c generates a line detection list that includes the identification information on {"pipe PL-1-001", "pipe PL-1-002", "pipe PL-1-003", ..., "pipe PL-1-010"} that are the lines of the detected "pipe PL-1", and stores the line detection list in the line detection information storage unit 14e.

### Flow direction detection process

The detection unit 15c performs the flow direction detection process. For example, the detection unit 15c detects a flow direction of a fluid or a signal in the plant diagram by using the plurality of detected symbols, the plurality of detected lines, and a symbol that indicates a direction included in the plant diagram.

As a specific example, when the "pump P-1" in the "plant diagram PD001" is detected and the line of "pipe PL-1" in the "plant diagram PD001" is detected, the detection unit 15c identifies a connection relationship based on location information on the "pump P-1" and "pipe PL-1" in the "plant diagram PD001", and detects the flow direction of a fluid or a signal in the identified connection relationship. At this time, when it is possible to identify the flow direction based on the identified connection relationship, the detection unit 15c detects the identified flow direction. Further, when it is difficult to identify the flow direction based on the identified connection relationship, the detection unit 15 detects the flow direction in accordance with a symbol, such as an arrow or an arrow-feather pattern, that is described on the plant diagram and that indicates the flow direction.

### 2-2-5-4. Generation unit 15d

The generation unit 15d generates various kinds of information. Meanwhile, the generation unit 15d may store the various kinds of generated information in the storage unit 14. In the following, a standard format conversion process, a graph generation process, and a line list generation process will be described.

### Standard format conversion process

The generation unit 15d performs the standard format conversion process. For example, the generation unit 15d converts the diagram data to a standard data format. At this time, the generation unit 15d performs conversion to DEXPI as the standard data format. Here, DEXPI is an information model for process automation that is standardized based on Open Platform Communication Unified Architecture (OPC UA).

As a specific example, the generation unit 15d acquires the plant diagram information on the "plant diagram PD001" from the plant diagram information storage unit 14a, and converts the plant diagram information to a "plant diagram PD001-S" that is a standard data format. Further, the generation unit 15d acquires plant diagram information on a "plant diagram PD002" from the plant diagram information storage unit 14a, and converts the plant diagram information to a "plant diagram PD002-S" that is a standard data format. Furthermore, the generation unit 15d acquires plant diagram information on a "plant diagram PD003" from the plant diagram information storage unit 14a, and converts the plant diagram information to a "plant diagram PD003-S" that is a standard data format.

### Graph generation process

The generation unit 15d performs the graph generation process. For example, the generation unit 15d generates a graph that represents the connection relationship between symbols and lines by using the converted standard data format. At this time, the generation unit 15d represents the symbols by nodes and the lines by edges by using the diagram data that is converted to DEXPI as the standard data format, and generates the graph that represents the connection relationship between the symbols and the lines. Further, the generation unit 15d may generate the graph that represents the connection relationship between the symbols and the lines by using a plurality of pieces of diagram data that are converted to the standard data formats.

As a specific example, the generation unit 15d converts each of symbols that are included in the "plant diagram PD001-S" that is the standard data format to a circular node with a predetermined size, identifies a line for which a connection is defined with respect to each of the symbols, connects each of the nodes by a linear or curved edge that represents a line, generates a graph that represents the connection relationship between the symbols and the lines, and stores the graph as the "graph information PG001" in the line generation information storage unit 14f. Further, when connection positions are defined between the "plant diagram PD001-S" and the "plant diagram PD002-S" that are the standard data formats, the generation unit 15d may connect between the connection positions of the "plant diagram PD001-S" and the "plant diagram PD002-S" by an edge, and generate the graph that represents the connection relationship between the symbols and the lines in the plurality of plant diagrams.

### Line list generation process

The generation unit 15d performs the line list generation process. For example, the generation unit 15d generates a line list related to pipes that are installed in the plant, based on the detection result. At this time, the generation unit 15d generates the line list that indicates the connection relationship with the devices (for example, plant devices or plant facilities) and the pipes that are installed in the plant, by using the identification information on the detected symbols and the detected line and the generated graph. Further, the generation unit 15d generates a line list that indicates a device or a pipe that is connected to the upstream side of the fluid that flows through the pipe, and a device or a pipe that is connected to the downstream side of the fluid that flows through the pipe.

As a specific example, firstly, the generation unit 15d acquires the "graph information PG001" from the line generation information storage unit 14f, and acquires the identification information on {"pump P-1-001", "pump P-1-002", ..., "pump P-1-006"} that are the symbols of the detected "pump P-1" as well as the location information from the symbol detection information storage unit 14c. Further, the generation unit 15d the identification information on {"pipe PL-1-001", "pipe PL-1-002", "pipe PL-1-003", ..., "pipe PL-1-010"} that are the lines of the detected "pipe PL-1" as well as the location information from the line detection information storage unit 14e. Secondly, the generation unit 15d identifies a node of the "graph information PG001" by using the identification information and the location information on the "pump P-1" or the like. Further, the generation unit 15d identifies an edge of the "graph information PG001" by using the identification information and the location information on the "pipe PL-1" or the like. Thirdly, the generation unit 15d identifies, for each identification information on {"pipe PL-1-001", "pipe PL-1-002", "pipe PL-1-003", ..., "pipe PL-1-010"} that are the lines of the "pipe PL-1", a connected plant device or a connected pipe, generates a line list that indicates the connection relationship between the devices and the pipes that are installed in the plant, and stores the line list in the line generation information storage unit 14f.

At this time, when the detection unit 15c has detected the flow direction of the fluid that flows through the pipe, the generation unit 15d generates a line list of {line: "pipe PL-1-001", upstream: "tank T-1-001", downstream: "pump P-1-002"}, {line: "pipe PL-1-002", upstream: "pump P-1-001", downstream: "tank T-1-002"}, {line: "pipe PL-1-003", upstream: "pipe PL-1-001", downstream: "pump P-1-001"}, or the like that includes a device or a pipe that is connected to the upstream side or the downstream side of each of the pipes, and stores the line list in the line generation information storage unit 14f.

Furthermore, when the detection unit 15c has detected texts, such as line numbers, that belong to the lines, the generation unit 15d generates a line list of {line: "pipe PL-1-001", line comment: "XXXXXXXX"}, {line: "pipe PL-1-002", line comment: "YYYYYYYY"}, {line: "pipe PL-1-003", line comment: "ZZZZZZZZZ"}, or the like that includes a line comment, and stores the line list in the line generation information storage unit 14f.

### 2-2-5-5. Providing unit 15e

The providing unit 15e provides various kinds of information. Meanwhile, the providing unit 15e may refer to various kinds of information that are stored in the storage unit 14. In the following, a symbol detection information transmission process, a line detection information transmission process, and a line generation information transmission process will be described.

### Symbol detection information transmission process

The providing unit 15e performs the symbol detection information transmission process. For example, the providing unit 15e transmits the symbol detection information that is the detection result related to the symbol that is detected by the detection unit 15c to the plant administrator terminal 20, and provides the symbol detection information to the plant administrator O.

As a specific example, the providing unit 15e transmits, as the symbol detection information, the symbol detection diagram, which is the plant diagram information on the "plant diagram PD001" in which all of the symbols in the detected "pump P-1" are colored in blue and displayed in a highlighted manner, and the symbol detection list, which includes the identification information on {"pump P-1-001", "pump P-1-002", ..., "pump P-1-006"} that are the symbols of the detected "pump P-1", to the plant administrator terminal 20 of the plant administrator O who is identified by the "plant administrator PO001".

### Line detection information transmission process

The providing unit 15e performs the line detection information transmission process. For example, the providing unit 15e transmits the line detection information that is the detection result related to the line that is detected by the detection unit 15c to the plant administrator terminal 20, and provides the line detection information to the plant administrator O.

As a specific example, the providing unit 15e transmits, as the line detection information, the line detection diagram, which is the plant diagram information on the "plant diagram PD001" in which all of the lines in the detected "pipe PL-1" are colored in blue and displayed in a highlighted manner, and the line detection list, which includes the identification information on {"pipe PL-1-001", "pipe PL-1-002", "pipe PL-1-003", ..., "pipe PL-1-010"} that are the lines of the detected "pipe PL-1", to the plant administrator terminal 20 of the plant administrator O who is identified by the "plant administrator PO001".

### Line generation information transmission process

The providing unit 15e performs the line generation information transmission process. For example, the providing unit 15e transmits the line generation information that is generated by the generation unit 15d to the plant administrator terminal 20, and provides the line generation information to the plant administrator O.

As a specific example, the providing unit 15e transmits, as the line generation information, the graph information of "graph information PG001" with respect to the line list that is identified by the "line list LL001" to the plant administrator terminal 20 of the plant administrator O who is identified by the "plant administrator PO001". Further, the providing unit 15e transmits, as the line generation information, {line: "pipe PL-1-001", line comment: "XXXXXXXX", upstream: "tank T-1-001", downstream: "pump P-1-002"}, {line: "pipe PL-1-002", line comment: "YYYYYYYY", upstream: "pump P-1-001", downstream: "tank T-1-002"}, {line: "pipe PL-1-003", line comment: "ZZZZZZZZZ", upstream: "pipe PL-1-001", downstream: "pump P-1-001 "} with respect to the line list that is identified by the "line list LL001" to the plant administrator terminal 20 of the plant administrator O who is identified by the "plant administrator PO001".

### 2-2-5-6. Notification unit 15f

The notification unit 15f provides various kinds of information. Meanwhile, the notification unit 15f may refer to various kinds of information that are stored in the storage unit 14. In the following, a symbol output result acquisition process, a line output result acquisition process, a symbol detection error notification process, and a line detection error notification process will be described.

### Symbol output result acquisition process

The notification unit 15f performs the symbol output result acquisition process. The notification unit 15f acquires an output result by using a trained machine learning model that outputs a symbol that is included in the plant diagram in accordance with input of the digital data and the symbol pattern of the plant diagram.

As a specific example, the notification unit 15f inputs the plant diagram information on the "plant diagram PD001" and the symbol pattern of {shape: "S-XXXX", line style: "solid line"} to the detection model DM of the detection model storage unit 14g, and acquires {"pump P-1-001", "pump P-1-002", ..., "pump P-1-006", "pump P-1-007"} that is an output result of the detection model DM.

### Line output result acquisition process

The notification unit 15f performs the line output result acquisition process. The notification unit 15f acquires an output result by using a trained machine learning model that outputs a line that is included in the plant diagram in accordance with input of the digital data and the symbol pattern of the plant diagram.

As a specific example, the notification unit 15f inputs the plant diagram information the "plant diagram PD001" and the line pattern of {thickness: "L-XXXX", line style: "solid line"} to the detection model DM of the detection model storage unit 14g, and acquires {"pipe PL-1-001", "pipe PL-1-002", "pipe PL-1-003", ..., "pipe PL-1-010", "pipe PL-1-011"} as an output result of the detection model DM.

### Symbol detection error notification process

The notification unit 15f performs the symbol detection error notification process. The notification unit 15f notifies the plant administrator O of a detection failure or false detection of a symbol by using the output result of the trained machine learning model.

As a specific example, the notification unit 15f compares a symbol detection list of {"pump P-1-001 ", "pump P-1-002", ..., "pump P-1-006"} of the "pump P-1" that is detected by the detection unit 15c and {"pump P-1-001", "pump P-1-002", ..., "pump P-1-006", "pump P-1-007"} that is the output result of the detection model DM, determines the possibility that there is a detection failure of the symbol of the "pump P-1" with the identification information of the "pump P-1-007", generates a message, such as "there is the possibility that there is a detection failure of the symbol", as symbol detection error information, and transmits the message to the plant administrator terminal 20 of the plant administrator O who is identified by the "plant administrator PO001".

### Line detection error notification process

The notification unit 15f performs the line detection error notification process. The notification unit 15f notifies the plant administrator O of a detection failure or false detection of a line by using the output result of the trained machine learning model.

As a specific example, the notification unit 15f compares a line detection list of {"pipe PL-1-001", "pipe PL-1-002", "pipe PL-1-003", ..., "pipe PL-1-010"} of the "pipe PL-1" that is detected by the detection unit 15c and {"pipe PL-1-001", "pipe PL-1-002", "pipe PL-1-003", ..., "pipe PL-1-010", "pipe PL-1-011"} that is the output result of the detection model DM, determines the possibility that there is a detection failure of the symbol of the "pipe PL-1" with the identification information of "PL-1-011", generates a message, such as "there is the possibility that there is a detection failure of the line", as line detection error information, and transmits the message to the plant administrator terminal 20 of the plant administrator O who is identified by the "plant administrator PO001".

### 2-3. Configuration example and process example of plant administrator terminal 20

A configuration example and a process example of the plant administrator terminal 20 will be described below with reference to FIG. 2. The plant administrator terminal 20 is a terminal that is used by the plant administrator O who manages a plant, and includes an input output unit 21, a control unit 22, and a communication unit 23.

### 2-3-1. Input output unit 21

The input output unit 21 controls input of various kinds of information to the plant administrator terminal 20. For example, the input output unit 21 is implemented by a mouse, a keyboard, or the like, and receives input of setting information or the like to the plant administrator terminal 20. Further, the input output unit 21 displays various kinds of information that are received from the plant administrator terminal 20. For example, the input output unit 21 is implemented by a display or the like, and displays various kinds of information that are stored in the plant administrator terminal 20.

The input output unit 21 displays a plant diagram that is viewed by the plant administrator O. Meanwhile, details of the plant diagram will be described later in the section of 2-3-4. First specific example of the display screen of the plant administrator terminal 20. Further, the input output unit 21 displays a symbol and line selection screen that allows the plant administrator O to select a symbol and a line. Meanwhile, details of the symbol and line selection screen will be described later in the section of 2-3-5. Second specific example of the display screen of the plant administrator terminal 20. Furthermore, the input output unit 21 displays a graph display screen that is viewed by the plant administrator O. Meanwhile, details of the graph display screen will be described later in the section of 2-3-6. Third specific example of the display screen of the plant administrator terminal 20. Moreover, the input output unit 21 displays a line list display screen that is viewed by the plant administrator O. Meanwhile, details of the line list display screen will be described later in the section of 2-3-7. Fourth specific example of the display screen of the plant administrator terminal 20.

### 2-3-2. Control unit 22

The control unit 22 transmits various kinds of information. For example, the control unit 22 transmits the plant diagram information on the plant diagram that is selected by the plant administrator O to the server apparatus 10. Further, the control unit 22 transmits the symbol selection information on a symbol and the line selection information on a line, which are selected by the plant administrator O in the symbol and line selection screen, to the server apparatus 10.

The control unit 22 receives various kinds of information. For example, the control unit 22 receives, from the server apparatus 10, the symbol detection information that includes the symbol detection diagram, the symbol detection list, or the like that is displayed by the input output unit 21. Further, the control unit 22 receives, from the server apparatus 10, the symbol detection error information that is displayed by the input output unit 21 and that notifies the plant administrator O of a detection failure or false detection of a symbol. Furthermore, the control unit 22 receives, from the server apparatus 10, the line detection information that includes the line detection diagram, the line detection list, or the like that is displayed by the input output unit 21. Moreover, the control unit 22 receives, from the server apparatus 10, the line detection error information that is displayed by the input output unit 21 and that notifies the plant administrator O of a detection failure or false detection of a line.

### 2-3-3. Communication unit 23

The communication unit 23 controls data communication with a different apparatus. For example, the communication unit 23 performs data communication with each of communication apparatuses via a router or the like. Further, the communication unit 23 is able to perform data communication with an operator terminal (not illustrated).

### 2-3-4. First specific example of display screen of plant administrator terminal 20

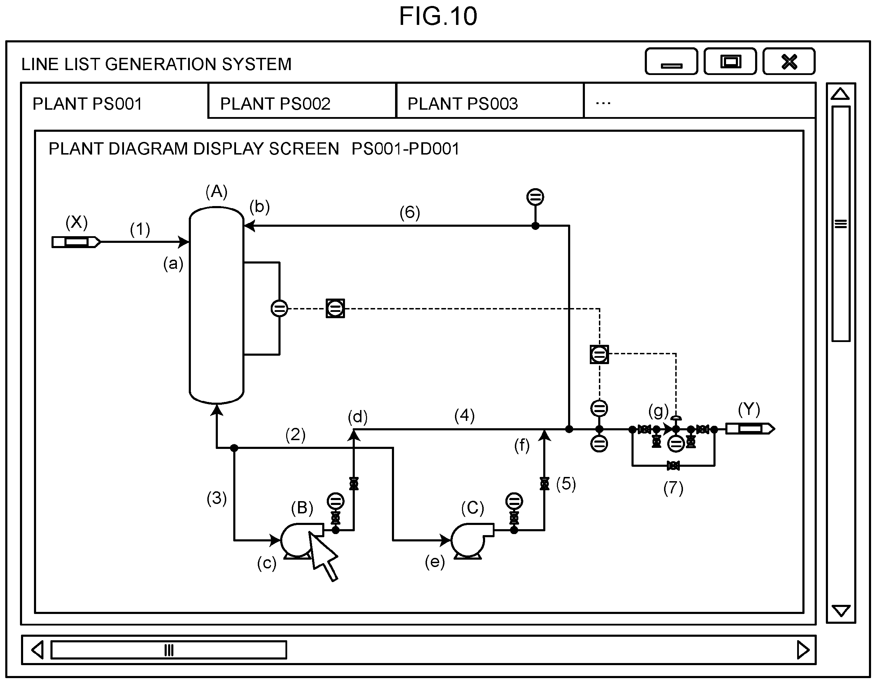

A first specific example of the display screen that is output by the input output unit 21 of the plant administrator terminal 20 will be described below with reference to FIG. 10. FIG. 10 is a diagram illustrating the first specific example of the display screen of the plant administrator terminal 20 according to one embodiment. The plant diagram display screen that is viewed by the plant administrator O will be described below.

### 2-3-4-1. Plant diagram display screen

As illustrated in an example in FIG. 10, the plant administrator terminal 20 displays, for each plant, a plant diagram that is generated with symbols that represent components of the plant and lines that represent connection components that connect the components of the plant. In the example illustrated in FIG. 10, in a plant diagram of a "plant PS001", a symbol of a tank (see (A) in FIG. 10) that is to be detected by the plant administrator O, symbols of pumps (see (B) and (C) in FIG. 10), and the like are displayed. Further, in the plant diagram of the "plant PS001", lines of pipes (see (1) to (7) in FIG. 10) that are to be detected by the plant administrator O, and the like are displayed. Furthermore, arrows (see (a) to (g) in FIG. 10), arrow-feature patterns (see (X) and (Y) in FIG. 10), and the like are displayed as flow direction identification symbols for identifying a flow direction that is to be detected by the plant administrator O.

### 2-3-4-2. Symbol display mode

The plant administrator terminal 20 is able to display, as a symbol display mode, a symbol with a different form, such as a different shape, a different line style, or a different color, a symbol with different orientation, a symbol to which text belongs, or the like. At this time, the plant administrator terminal 20 may be able to display a plant diagram that represents a three-dimensional plant configuration, by drawing an anteroposterior relationship of symbols.

### 2-3-4-3. Line display mode

The plant administrator terminal 200 is able to display, as a line display mode, line with a different form, such as a different shape, a different line style, or a different color, a line with different orientation, a line to which a line number is added, or the like. At this time, the plant administrator terminal 20 may be able to display a plant diagram that represents a three-dimensional plant configuration, by drawing an anteroposterior relationship of lines.

### 2-3-4-4. Flow direction identification symbols

In the example illustrated in FIG. 10, the arrow-feature patterns in the rightward direction as indicated by (X) and (Y) in FIG. 10 indicate that a fluid or the like flows from left to right in the figure, rightward arrows as indicated by (a), (c), (e), and (g) in FIG. 10 indicate that the fluid or the like flows from left to right in the figure, a left arrow as indicated by (b) in FIG. 10 indicates that the fluid or the like flows from right to left in the figure, and upward arrows as indicated by (d) and (f) in FIG. 10 indicate that the fluid or the like flows from bottom to top in the figure.

### 2-3-5. Second specific example of display screen of plant administrator terminal 20

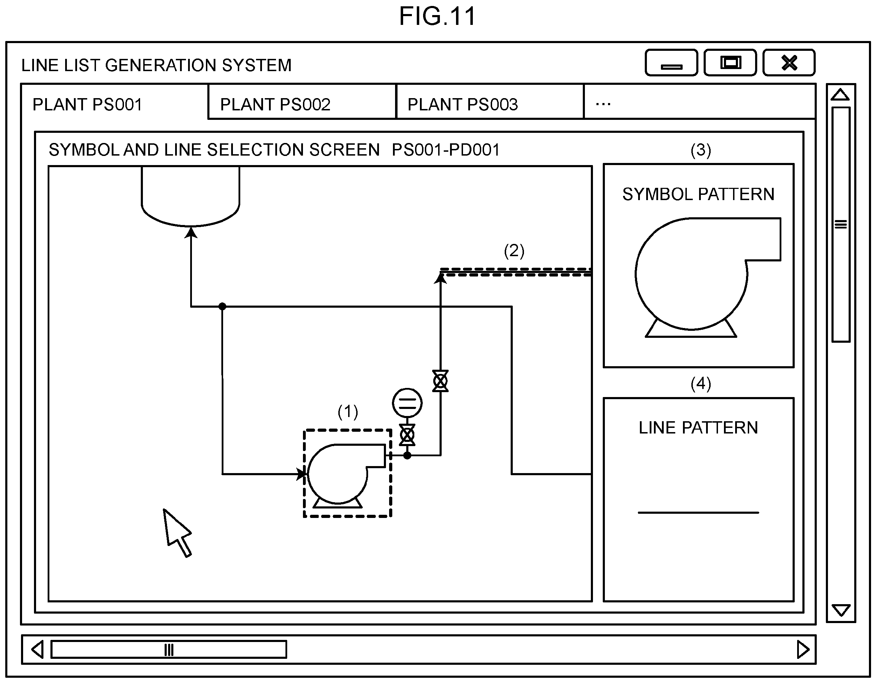

A second specific example of the display screen that is output by the input output unit 21 of the plant administrator terminal 20 will be described below with reference to FIG. 11. FIG. 11 is a diagram illustrating the second specific example of the display screen of the plant administrator terminal 20 according to one embodiment. In the following, the symbol and line selection screen that allows the plant administrator O to select a symbol and a line will be described.

### 2-3-5-1. Symbol and line selection screen

As illustrated in an example in FIG. 11, the plant administrator terminal 20 displays the symbol and line selection screen that allows the plant administrator O to select a symbol and a line that are to be detected on the plant diagram. In the example illustrated in FIG. 11, the plant administrator terminal 20 displays a plant diagram in which a symbol of a pump (see (1) in FIG. 11) that is to be detected by the plant administrator O in the plant diagram of the "plant PS001" is enlarged. At this time, the plant administrator O is able to select a corresponding symbol by performing click operation on the symbol that is to be detected. Further, the plant administrator terminal 20 displays a plant diagram in which a line of a pipe (see (2) in FIG. 11) that is to be detected by the plant administrator O in the plant diagram of the "plant PS001" is enlarged. At this time, the plant administrator O is able to select a corresponding line by performing click operation on the line that is to be detected.

Furthermore, the plant administrator terminal 20 displays a symbol pattern (see (3) in FIG. 11) in which the symbol that is selected by the plant administrator O on the plant diagram is enlarged. At this time, the plant administrator O is able to modify a shape or the like of the displayed symbol pattern or delete text that belongs to the symbol. Moreover, the plant administrator terminal 20 displays a line pattern (see (4) in FIG. 11) in which the line that is selected by the plant administrator O on the plant diagram is enlarged. At this time, the plant administrator O is able to modify a thickness or the line of the displayed line pattern or delete a line number that belongs to the line.

### 2-3-5-2. Designation of symbol detection condition

The plant administrator O is able to designate a detection condition for detecting a symbol. For example, the plant administrator O is able to designate, as the detection condition, a matched condition with respect to any of the shape, the line style, and the color that are the symbol patterns, orientation of the symbol, presence or absence of text that belongs to the symbol, or the like. Further, the plant administrator O is able to designate a detection condition that detection is performed when a size of the symbol completely coincides with. Furthermore, the plant administrator O is able to designate a detection condition that all of symbols included in a plant diagram are collectively detected, independently of whether or not the symbol coincides with.

### 2-3-5-3. Designation of line detection condition

The plant administrator O is able to designate a detection condition for detecting a line. For example, the plant administrator O is able to designate, as the detection condition, a matched condition with respect to any of the thickness, the line style, and the color that are the line patterns, orientation of the line, presence or absence of a line number that belongs to the line, or the like. Further, the plant administrator O is able to designate a detection condition that detection is performed when a length of the line completely coincides with. Furthermore, the plant administrator O is able to designate a detection condition that all of lines included in a plant diagram are collectively detected, independently of whether or not the line coincides with.

### 2-3-5-4. Designation of flow direction identification symbol

The plant administrator O is able to designate a flow direction identification symbol when detecting the flow direction. For example, the plant administrator O is able to designate, as a flow direction identification symbol that is to be reflected by the plant administrator O, a corresponding flow direction identification symbol by performing click operation on an arbitrary arrow or an arbitrary arrow-feature pattern.

### 2-3-6. Third specific example of display screen of plant administrator terminal 20

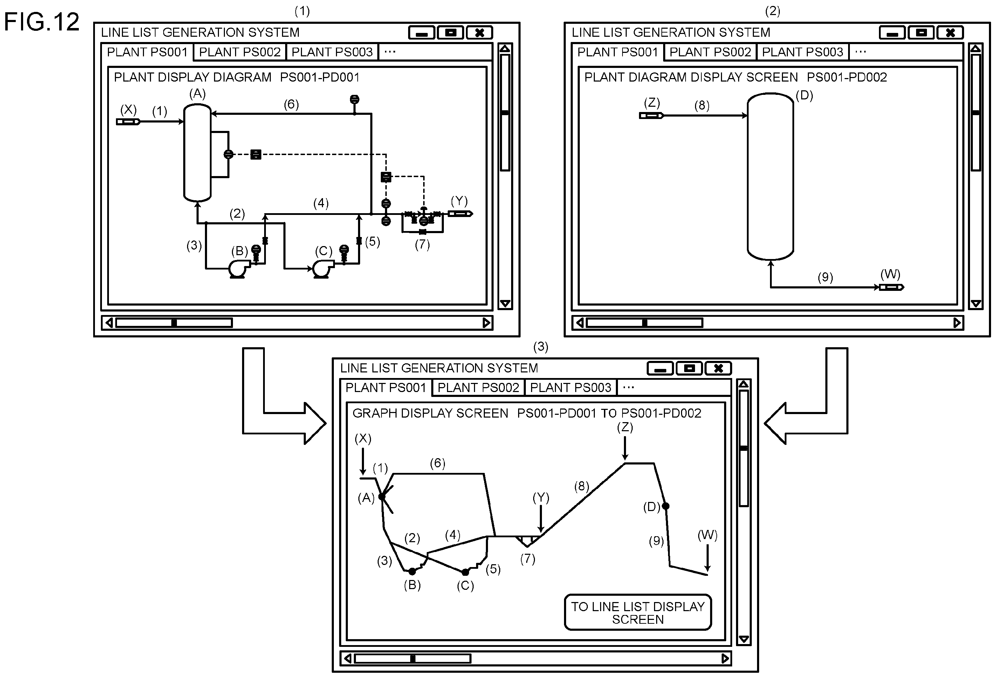

A third specific example of the display screen that is output by the input output unit 21 of the plant administrator terminal 20 will be described below with reference to FIG. 12. FIG. 12 is a diagram illustrating the third specific example of the display screen of the plant administrator terminal 20 according to one embodiment. In the following, a graph display screen that is viewed by the plant administrator O will be described.

### 2-3-6-1. Graph display screen

As illustrated in an example in FIG. 12, the plant administrator terminal 20 displays a graph that represents a connection relationship between symbols and lines and that is generated from a plurality of plant diagrams. In the example illustrated in FIG. 12, the plant administrator terminal 20 combines, in the "plant PS001", the plant diagram of the "plant diagram PD001" (see (1) in FIG. 12) and the plant diagram of the "plant diagram PD002" (see (1) in FIG. 12), and displays the graph that represents the connection relationship (see (3) in FIG. 12) by using nodes and edges. At this time, the plant administrator terminal 20 displays the graph based on the graph information that is generated by the server apparatus 10 from connection positions (for example, the arrow-feature pattern (Y) and an arrow-feature pattern (Z) are connected) that is defined in the plant diagram.

### 2-3-6-2. Modification of connection relationship

The plant administrator O is able to modify the connection relationship by operating the nodes or the edges in the display graph on the graph display screen. For example, the plant administrator O is able to perform modification and obtain a correct connection relationship by combining, in the graph display screen, a node and an edge that are connected in the plant diagram but that are not connected in the graph. In contrast, the plant administrator O is able to perform modification and obtain a correct connection relationship by disconnecting, in the graph display screen, a node and an edge that are not connected in the plant diagram but that are connected in the graph.

### 2-3-6-3. Line list display screen button

The plant administrator O is able to transition to the line list display screen that displays the line list, by performing click operation on a button in which "to line list display screen" is displayed in the graph display screen.

### 2-3-7. Fourth specific example of display screen of plant administrator terminal 20

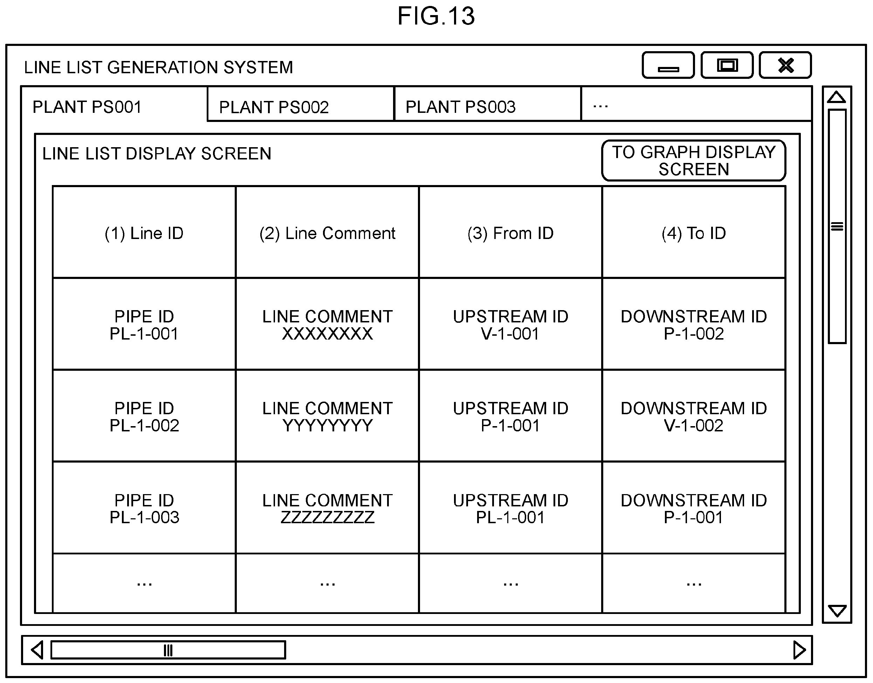

A fourth specific example of the display screen that is output by the input output unit 21 of the plant administrator terminal 20 will be described below with reference to FIG. 13. FIG. 13 is a diagram illustrating the fourth specific example of the display screen of the plant administrator terminal 20 according to one embodiment. In the following, a line list display screen that is viewed by the plant administrator O will be described.

### 2-3-7-1. Line list display screen

As illustrated in an example in FIG. 13, the plant administrator terminal 20 displays the line list that indicates a connection relationship between devices and pipes that are installed in the plant. In the example illustrated in FIG. 13, the plant administrator terminal 20 displays identification information on a line (see "Line ID" in (1) in FIG. 13), a line comment (see "Line Comment" in (2) in FIG. 13), identification information on a device or a pipe that is connected to an upstream side of the line (see "From ID" in (13) in FIG. 13), and identification information on a device or a pipe that is connected to a downstream side of the line (see "To ID" in (4) in FIG. 13).

### 2-3-7-2. Modification of line list

The plant administrator O is able to modify the line list by performing operation, such as addition or deletion, on each of items in the line list that is displayed in the line list display screen. For example, the plant administrator O is able to perform modification and obtain a correct line list by adding, in the line list display screen, a line that is displayed in the plant diagram but that is not displayed in the line list. In contrast, the plant administrator is able to perform modification and obtain a correct line list by deleting, in the line list display screen, a line that is not displayed in the plant diagram but that is displayed in the line list.

### 2-3-7-3. Graph display screen button

The plant administrator O is able to transition to the line list display screen that displays the graph, by performing click operation on a button in which "to graph display screen" is displayed in the line list display screen.

### 3. Flow of process performed by line list generation system 100

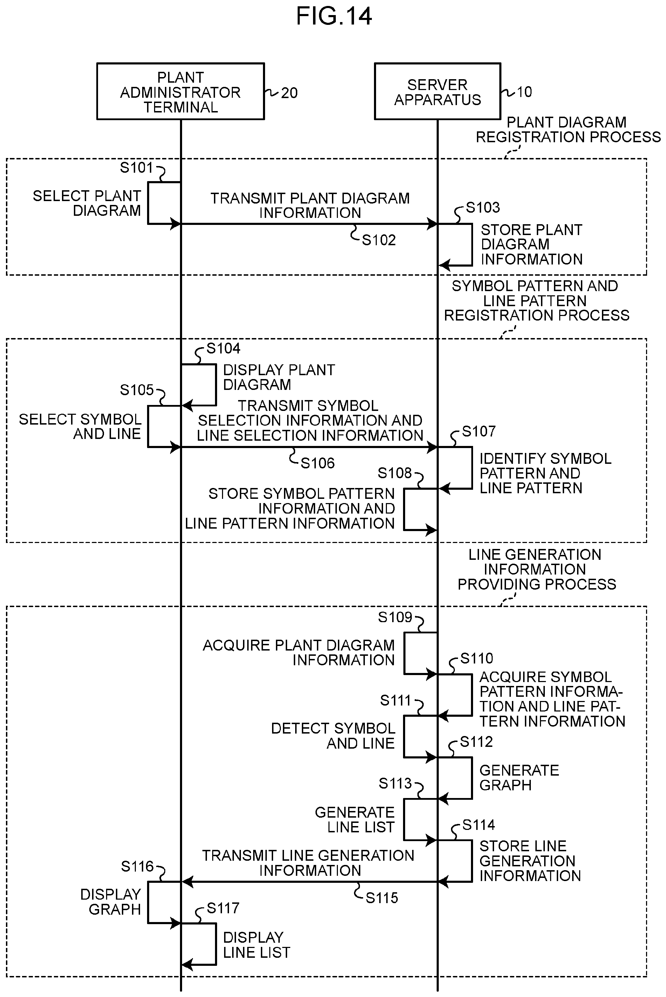

A flow of an entire process that is performed by the line list generation system 100 according to one embodiment will be described below with reference to FIG. 14. FIG. 14 is a sequence diagram illustrating an example of the flow of the entire process that is performed by the line list generation system 100 according to one embodiment. In the following, a plant diagram registration process, a symbol pattern and line pattern registration process, and a line generation information providing process will be described. Meanwhile, processes from Step S101 to Step S117 below may be performed in a different order. Further, some of the processes from Step S101 to Step S117 may be omitted.

### 3-1. Plant diagram registration process

The line list generation system 100 performs the plant diagram registration process that is indicated by the processes from Step S101 to Step S103 below.

Firstly, the plant administrator terminal 20 performs a plant diagram selection process (Step S101). For example, the plant administrator terminal 20 receives a plant diagram of a plant that is selected by operation performed by the plant administrator O. Secondly, the plant administrator terminal 20 performs a plant diagram information transmission process (Step S102). For example, the plant administrator terminal 20 transmits digital data of the plant diagram of the plant that is selected by operation performed by the plant administrator O to the server apparatus 10. Thirdly, the server apparatus 10 performs a plant diagram information storage process (Step S103). For example, the server apparatus 10 stores plant diagram information that is received from the plant administrator terminal 20, for each of the plant administrators O.

### 3-2. Symbol pattern and line pattern registration process

The line list generation system 100 performs the symbol pattern and line pattern registration process that is indicated by the processes from Step S104 to Step S108 below.

Firstly, the plant administrator terminal 20 performs a plant diagram display process (Step S104). For example, the plant administrator terminal 20 displays, on the monitor screen, the plant diagram of the plant that is selected by operation performed by the plant administrator O. Secondly, the plant administrator terminal 20 performs a symbol and line selection process (Step S105). For example, the plant administrator terminal 20 receives a symbol that is selected on the plant diagram by operation performed by the plant administrator O, and receives a line that is selected on the plant diagram by operation performed by the plant administrator O. Thirdly, the plant administrator terminal 20 performs symbol selection information and line selection information transmission process (Step S106). For example, the plant administrator terminal 20 transmits, to the server apparatus 10, identification information on the symbol that is selected by operation performed by the plant administrator or location information on the plant diagram, and transmits identification information on the line that is selected by operation performed by the plant administrator O or location information on the plant diagram. Fourthly, the server apparatus 10 performs a symbol pattern and line pattern identification process (Step S107). For example, the server apparatus 10 refers to the plant diagram information based on the symbol selection information that is received from the plant administrator terminal 20, identifies a symbol pattern from the digital data of the plant diagram information, refers to the plant diagram information based on the line selection information that is received from the plant administrator terminal 20, and identifies a line pattern from the digital data of the plant diagram information. Fifthly, the server apparatus 10 performs a symbol pattern information and line pattern information storage process (Step S108). For example, the server apparatus 10 stores the symbol pattern information that includes the identified symbol pattern for each of the plant administrators O, and stores the line pattern information that includes the identified line pattern for each of the plant administrators O.

### 3-3. Line generation information providing process

The line list generation system 100 performs the line generation information providing process that is indicated by the processes from Step S109 to Step S117 below.

Firstly, the server apparatus 10 performs a plant diagram information acquisition process (Step S109). For example, the server apparatus 10 receives a request for generation of the line generation information by operation performed by the plant administrator O, searches through the stored plant diagram information, and acquires the plant diagram information on a corresponding plant. Secondly, the server apparatus 10 performs a symbol pattern information and line pattern information acquisition process (Step S110). For example, the server apparatus 10 receives a request for detection of a symbol and a line by operation performed by the plant administrator O, searches through the stored symbol pattern information and the stored line pattern information, and acquires the symbol pattern information on a corresponding symbol and the line pattern information on a corresponding line. Thirdly, the server apparatus 10 performs a symbol and line detection process (Step S111). For example, the server apparatus 10 searches through the acquired plant diagram information, detects a symbol that coincides with the symbol pattern of the acquired symbol pattern information, and detects a line that coincides with the line pattern of the acquired the line pattern information. Fourthly, the server apparatus 10 performs the graph generation process (Step S112). For example, the server apparatus 10 generates a graph that represents a connection relationship between symbols and lines by using the detected symbol, the detected line, and the acquired plant diagram information. Fifthly, the server apparatus 10 performs a line list the generation process (Step S113). For example, the server apparatus 10 generates a line list related to pipes that are installed in the plant. Sixthly, the server apparatus 10 performs a line generation information storage process (Step S114). For example, the server apparatus 10 stores the line generation information that includes the generated graph or the generated line list for each of the plant administrators O. Seventhly, the server apparatus 10 performs the line generation information transmission process (Step S115). For example, the server apparatus 10 transmits the line generation information that includes the generated graph or the generated line list to the plant administrator terminal 20. Eighthly, the plant administrator terminal 20 performs a graph display process (Step S116). For example, the plant administrator terminal 20 displays, on the monitor screen, a graph that is included in the line generation information that is received from the server apparatus 10. Ninthly, the plant administrator terminal 20 performs a line list display process (Step S117). For example, the plant administrator terminal 20 displays, on the monitor screen, a line list that is included in the line generation information that is received from the server apparatus 10.

### 4. Effects of one embodiment

Lastly, effects of one embodiment will be described. In the following, first to twelfth effects corresponding to the processes according to one embodiment will be described.

### 4-1. First effect

Firstly, in one process according to one embodiment as described above, the server apparatus 10 acquires a plant diagram that is used for construction, operation, and maintenance of a plant, detects a symbol and a line that are included in the plant diagram, and generates a line list related to a pipe that is installed in the plant based on a detection result. Therefore, in one process according to one embodiment, it is possible to easily generate the line list from the plant diagram.

### 4-2. Second effect

Secondly, in one process according to one embodiment as described above, the server apparatus 10 acquires, as the plant diagram, diagram data that includes a plurality of symbols and a plurality of lines that are generated with digital data, converts the diagram data to a standard data format, generates a graph that represents a connection relationship between a symbol and a line by using the converted standard data format, and generates a line list that indicates a connection relationship between a device and the pipe that are installed in the plant, by using identification information on the detected symbol, the identification information on the detected line, and the generated graph. Therefore, in one process according to one embodiment, by generating the graph that represents the connection relationship between the symbol and the line, it is possible to easily generate the line list from the plant diagram.

### 4-3. Third effect

Thirdly, in one process according to one embodiment as described above, the server apparatus 10 generates the line list that indicates one of the device and the pipe that are connected to an upstream side of a fluid that flows through the pipe, and indicates one of the device and the pipe that are connected to a downstream side of the fluid that flows through the pipe. Therefore, in one process according to one embodiment, it is possible to easily generate, from the plant diagram, the line list that includes information on a plant device, a plant facility, a pipe, or the like on the upstream side and the downstream side of the pipe.

### 4-4. Fourth effect

Fourthly, in one process according to one embodiment as described above, the server apparatus 10 performs conversion to DEXPI as the standard data format. Therefore, in one process according to one embodiment, by performing conversion to an information model of an automation system that is compliant with OPC UA, it is possible to easily generate the line list from the plant diagram.

### 4-5. Fifth effect

Fifthly, in one process according to one embodiment as described above, the server apparatus 10 receives a selection of a desired symbol from among a plurality of symbols that are included in the displayed plant diagram, registers a pattern of the symbol for which the selection is received, and detects, in the displayed plant diagram, all of symbols that coincide with a form of the registered pattern of the symbol and that include the symbol for which the selection is received. Therefore, in one process according to one embodiment, by efficiently detecting information on symbols that are included in the plant diagram, it is possible to easily generate the line list from the plant diagram.

### 4-6. Sixth effect

Sixthly, in one process according to one embodiment as described above, the server apparatus 10 receives a symbol that is selected by operation performed by the plant administrator O on the plant diagram that is displayed on the plant administrator terminal 20, identifies, as a pattern of the symbol for which the selection is received, at least one of a shape, a line style, or a color of the symbol, and detects all of symbols that coincide with the pattern of the symbol from among a plurality of symbols that are included in the diagram. Therefore, in one process according to one embodiment, by efficiently detecting a symbol that coincides with or is similar to a form of the symbol that is selected by the plant administrator O, it is possible to easily generate a line list from a plant diagram.

### 4-7. Seventh effect

Seventhly, in one process according to one embodiment as described above, the server apparatus 10 identifies orientation of the symbol for which the selection is received, and detects all of symbols that coincide with the orientation from among a plurality of symbols that are included in the diagram. Therefore, in one process according to one embodiment, by efficiently detecting a symbol that coincides with or is similar to the form of the symbol selected by the plant administrator O and that further coincides with the orientation of the symbol, it is possible to easily generate a line list from a plant diagram.

### 4-8. Eighth effect

Eighthly, in one process according to one embodiment as described above, the server apparatus 10 identifies a text that belongs to the symbol for which the selection is received, and detects all of symbols that coincide with the text from among a plurality of symbols that are included in the diagram. Therefore, in one process according to one embodiment, by efficiently detecting a symbol that coincides with or is similar to the form of the symbol selected by the plant administrator O and that further coincides with the text that belongs to the symbol, it is possible to easily generate a line list from a plant diagram.

### 4-9. Ninth effect

Ninthly, in one process according to one embodiment as described above, the server apparatus 10 receives a selection of a desired line from among a plurality of lines that are included in the displayed plant diagram, registers a line for which the selection is received, and detects, in the displayed plant diagram, all of lines that coincide with a form of the registered pattern of the line including the line for which the selection is received. Therefore, in one process according to one embodiment, by efficiently detecting information on the line that is included in the plant diagram, it is possible to easily generate a line list from a plant diagram.

### 4-10. Tenth effect

Tenthly, in one process according to one embodiment as described above, the server apparatus 10 receives a line that is selected by operation that is performed by the plant administrator O on the plant diagram that is displayed on the plant administrator terminal 20, identifies, as a pattern of the line for which the selection is received, at least one of a thickness, a line style, or a color of a line from among the plurality of lines that are included in the plant diagram, and detects all of lines that coincide with the pattern of the line. Therefore, in one process according to one embodiment, by efficiently detecting a line that coincide with or is similar to a form of the line that is selected by the plant administrator O, it is possible to easily generate a line list from a plant diagram.

### 4-11. Eleventh effect

Eleventhly, in one process according to one embodiment as described above, the server apparatus 10 further identifies orientation of the line for which the selection is received, and detects all of lines that coincide with the orientation of the line from among the plurality of lines that are included in the plant diagram. Therefore, in one process according to one embodiment, by efficiently detecting a line that coincides with or is similar to the form of the line selected by the plant administrator O and that further coincides with the orientation, it is possible to easily generate a line list from a plant diagram.

### 4-12. Twelfth effect

Twelfthly, in one process according to one embodiment as described above, the server apparatus 10 further identifies a line number that belongs to the line for which the selection is received, and detects all of lines that coincide with the line number from among the plurality of lines that are included in the plant diagram. Therefore, in one process according to one embodiment, by efficiently detecting a line that coincide with or is similar to the form of the line selected by the plant administrator O and that further coincides with the line number that belongs to the line, it is possible to easily generate a line list from a plant diagram.

### 5. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 6. Hardware

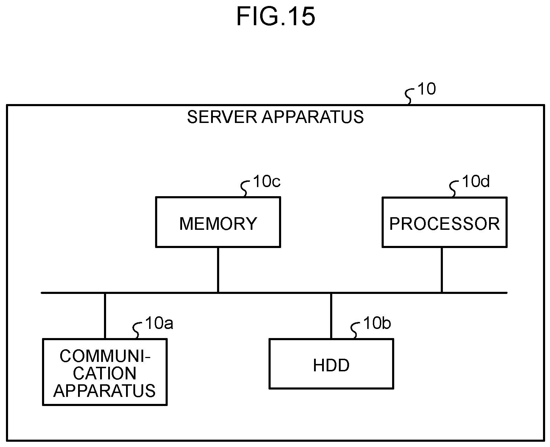

A hardware configuration example of the server apparatus 10 will be described below with reference to FIG. 15. FIG. 15 is a diagram illustrating a hardware configuration example according to one embodiment. As illustrated in FIG. 15, the server apparatus 10 includes a communication apparatus 10a, a Hard Disk Drive (HDD) 10b, a memory 10c, and a processor 10d. Further, all of units illustrated in FIG. 15 are connected to one another via a bus or the like.

The communication apparatus 10a is a network interface card or the like and performs communication with a different server apparatus. The HDD 10b stores therein a program and various kinds of information that implement the functions illustrated in FIG. 2.

The processor 10d reads a program that executes the same process as that of each of the processing units illustrated in FIG. 2 from the HDD 10b or the like, loads the program onto the memory 10c, and operates the process that implements each of the functions illustrated in FIG. 2. For example, the process executes the same function as that of each of the processing units included in the server apparatus 10. Specifically, the processor 10d reads programs that have the same functions as those of the acquisition unit 15a, the reception unit 15b, the detection unit 15c, the generation unit 15d, the providing unit 15e, the notification unit 15f, and the like from the HDD 10b or the like. Further, the processor 10d performs a process that executes the same processes as those of the acquisition unit 15a, the reception unit 15b, the detection unit 15c, the generation unit 15d, the providing unit 15e, the notification unit 15f, and the like.

In this manner, the server apparatus 10 operates as an apparatus that implements various kinds of processing methods by reading and executing a program. Further, the server apparatus 10 is able to implement the same functions as those of one embodiment as described above by causing a medium reading apparatus to read the above-described program from a recording medium and execute the read program. Meanwhile, the program as described above need not always be executed by the server apparatus 10. For example, the present invention may be applied in the same manner even when a different computer or a different server apparatus executes the above-described program or the different computer and the different server apparatus execute the above-described program in a cooperative manner.

The program may be distributed via a network, such as the Internet. Further, the program may be recorded in a computer readable recording medium, such as a hard disk, a flexible disk (FD), a compact disc (CD)-ROM, a Magneto-Optical disk (MO), or a Digital Versatile Disk (DVD), and may be executed by being read from the recording medium by a computer.

According to one aspect of the present invention, it is possible to easily generate a line list from a plant diagram.

## Claims

1. A line list generation system (100) comprising:
an acquisition unit (15a) that acquires a diagram that is used for construction, operation, and maintenance of a plant;
a detection unit (15c) that detects a symbol and a line that are included in the diagram; and
a generation unit (15d) that generates a line list related to a pipe that is installed in the plant, based on the detection result.

2. The line list generation system (100) according to claim 1, wherein
the acquisition unit (15a) acquires, as the diagram, diagram data that includes a plurality of symbols and a plurality of lines that are generated with digital data, and
the generation unit (15d)
converts the diagram data to a standard data format,
generates a graph that represents a connection relationship between a symbol and a line by using the standard data format, and
generates a line list that indicates a connection relationship between a device and the pipe that are installed in the plant, by using identification information on the detected symbol, the identification information on the detected line, and the generated graph.

3. The line list generation system (100) according to claim 2, wherein the generation unit (15d) generates the line list that indicates one of the device and the pipe that are connected to an upstream side of a fluid that flows through the pipe, and indicates one of the device and the pipe that are connected to a downstream side of the fluid that flows through the pipe.

4. The line list generation system (100) according to claim 2 or 3, wherein the generation unit (15d) performs conversion to Data Exchange in the Process industry (DEXPI) as the standard data format.

5. The line list generation system (100) according to any one of claims 1 to 5, further comprising:
a reception unit (15b) that receives a selection of a desired symbol from among a plurality of symbols that are included in the displayed diagram, and registers a pattern of the symbol for which the selection is received, wherein
the detection unit (15c) detects, in the displayed diagram, all of symbols that coincide with a form of the registered pattern of the symbol and that include the symbol for which the selection is received.

6. The line list generation system (100) according to claim 5, wherein
the reception unit (15b) receives a symbol that is selected by operation performed by a user on the diagram that is displayed on a user terminal, and
the detection unit (15c) identifies, as a pattern of the symbol for which the selection is received, at least one of a shape, a line style, or a color of a symbol, and detects all of symbols that coincide with the pattern of the symbol from among the plurality of symbols that are included in the diagram.

7. The line list generation system (100) according to claim 5 or 6, wherein the detection unit (15c) identifies orientation of the symbol for which the selection is received, and detects all of symbols that coincide with the orientation from among a plurality of symbols that are included in the diagram.

8. The line list generation system (100) according to any one of claims 5 to 7, wherein the detection unit (15c) identifies a text that belongs to the symbol for which the selection is received, and detects all of symbols that coincide with the text from among a plurality of symbols that are included in the diagram.

9. The line list generation system (100) according to any one of claims 1 to 8, further comprising:
a reception unit (15b) that receives a selection of a desired line from among a plurality of lines that are included in the displayed diagram, and registers the line for which the selection is received, wherein
the detection unit (15c) detects, in the displayed diagram, all of lines that coincide with a form of the registered pattern of the line including the line for which the selection is received.

10. The line list generation system (100) according to claim 9, wherein
the reception unit (15b) receives a line that is selected by operation that is performed by a user on the diagram that is displayed on a user terminal, and
the detection unit (15c) identifies, as a pattern of the line for which the selection is received, at least one of a thickness, a line style, or a color of a line, from among the plurality of lines that are included in the diagram.

11. The line list generation system (100) according to claim 9 or 10, wherein the detection unit (15c) further identifies orientation of the line for which the selection is received, and detects all of lines that coincide with the orientation of the line from among the plurality of lines that are included in the diagram.

12. The line list generation system (100) according to any one of claims 9 to 11, wherein the detection unit (15c) further identifies a line number that belongs to the line for which the selection is received, and detects all of lines that coincide with the line number from among the plurality of lines that are included in the diagram.

13. A line list generation method that is implemented by a computer (10), the line list generation method comprising:
acquiring a diagram that is used for construction, operation, and maintenance of a plant;
detecting a symbol and a line that are included in the diagram; and
generating a line list related to a pipe that is installed in the plant, based on the detection result.

14. A line list generation program that causes a computer (10) to execute a process, the process comprising:
acquiring a diagram that is used for construction, operation, and maintenance of a plant;
detecting a symbol and a line that are included in the diagram; and
generating a line list related to a pipe that is installed in the plant, based on the detection result.
